# EUROPEAN PATENT APPLICATION

(11) **EP 4 618 445 A1**
(43) Date of publication of application: **17.09.2025**
(21) Application number: 25159260.6
(22) Date of filing: 21.02.2025
(51) Int. Cl.: H04B 10/071

(54) **MONITORING AND SENSING IN OPTICAL NETWORKS**

(30) Priority: 15.03.2024 US 202418606293
(71) Applicant: Nokia Solutions and Networks Oy, 02610 Espoo (FI)
(72) Inventor: CAILLAUD, Christophe, Arcueil (FR); BONK, Rene, Pforzheim (DE); VAN VEEN, Doutje, New Providence (US)
(74) Representative: Nokia EPO representatives

(57) **Abstract**

Various example embodiments for supporting optical monitoring and sensing for an optical network are presented. Various example embodiments for supporting optical monitoring and sensing for an optical network may be configured to support various optical network monitoring and/or sensing techniques based on use of an optical communication device including a divider configured to split an optical signal into a first optical signal portion and a second optical signal portion, a polarization independent photodetector configured to monitor a power level of the optical signal based on the first optical signal portion, and a polarization sensitive photodetector configured to monitor a polarization of the optical signal based on the second optical signal portion. Various example embodiments for supporting optical monitoring and sensing may be configured to support optical monitoring and sensing in various optical networks, such as optical access networks (e.g., passive optical networks), optical backhaul networks, or the like.

## Description

### TECHNICAL FIELD

Various example embodiments relate generally to optical communication systems and, more particularly but not exclusively, to supporting optical monitoring and sensing functions in optical communication systems.

### BACKGROUND

Various communications technologies may be used to support communications in various types of communication systems.

### SUMMARY

In at least some example embodiments, an apparatus includes an optical communication device comprising a divider configured to split an optical signal into a first optical signal portion and a second optical signal portion, a polarization independent photodetector configured to monitor a power level of the optical signal based on the first optical signal portion, and a polarization sensitive photodetector configured to monitor a polarization of the optical signal based on the second optical signal portion. In at least some example embodiments, the polarization sensitive photodetector comprises a modulator-detector configured to support a modulation function and a detection function. In at least some example embodiments, the polarization sensitive photodetector comprises a reversely-biased electro-absorption modulator based on quantum confined stark effect (QCSE). In at least some example embodiments, the polarization sensitive photodetector comprises a polarization sensitive interferometric modulator and a detector, wherein a first side of the polarization sensitive interferometric modulator is connected to the divider and a second side of the polarization sensitive interferometric modulator is connected to the detector. In at least some example embodiments, the polarization sensitive interferometric modulator comprises a Mach-Zehnder modulator or a ring modulator. In at least some example embodiments, the optical communication device is configured to detect a change in the polarization of the optical signal based on a determination that a power level of the first optical signal portion remains relatively constant at the polarization independent photodetector while an absorption level of the second optical signal portion at the polarization sensitive photodetector varies. In at least some example embodiments, the optical communication device is configured to detect a condition or an event associated with an optical fiber based on one of a determination that a power level of the first optical signal portion varies at the polarization independent photodetector or a determination that a power level of the first optical signal portion remains relatively constant at the polarization independent photodetector while an absorption level of the second optical signal portion at the polarization sensitive photodetector varies. In at least some example embodiments, the optical signal comprises a back-reflected optical time domain reflectometry signal received at the optical communication device. **In** at least some example embodiments, the optical signal comprises a monitoring optical signal received at the optical communication device from a remote optical communication device via an optical fiber. **In** at least some example embodiments, the optical signal comprises a wideband sensing signal including a first wavelength and a second wavelength, wherein the first optical signal portion is at the first wavelength and the second optical signal portion is at the second wavelength. In at least some example embodiments, the optical signal comprises a wavelength outside of a data transmission wavelength range used by the optical communication device for data transmissions, wherein the optical communication device is configured to support parallel operation of the data transmissions by the optical communication device and monitoring by the optical communication device based on the optical signal. In at least some example embodiments, the optical signal comprises a wavelength within a data transmission wavelength range used by the optical communication device for data transmissions, wherein the optical communication device is configured to switch between the data transmissions by the optical communication device and monitoring by the optical communication device based on the optical signal. In at least some example embodiments, the divider comprises a wavelength splitter, the optical communication device is configured to operate as both a data communication transceiver for optical data signals and an optical time domain reflectometry transceiver for optical time domain reflectometry signals, and the optical communication device further comprises a semiconductor optical amplifier disposed between the wavelength splitter and an optical fiber, wherein the semiconductor optical amplifier is configured to amplify the optical data signals and the optical time domain reflectometry signals and a laser connected to the polarization sensitive photodetector, wherein the laser is configured to generate light to be modulated in the polarization sensitive photodetector for the optical data signals, wherein the wavelength splitter is configured to connect a first wavelength between the wavelength splitter and the polarization independent photodetector and a second wavelength, different from the first wavelength, between the wavelength splitter and the polarization sensitive photodetector. In at least some example embodiments, the optical communication device is configured to perform an optical time domain reflectometry test by supporting initiation of the optical time domain reflectometry test by switching off the laser, stopping modulation of communications data by the polarization sensitive photodetector, and modulating the semiconductor amplifier to generate an optical time domain reflectometry pulse and supporting an optical time domain reflectometry measurement by receiving a back-reflected optical time domain reflectometry signal, detecting a reflected power of the back-reflected optical time domain reflectometry signal by the polarization independent photodetector, and obtaining information on variation of polarization of the back-reflected optical time domain reflectometry signal based on detection of at least one polarization by the polarization sensitive photodetector. In at least some example embodiments, the optical communication device further comprises a driver configured to provide an electrical drive signal for optical data signals, an optical time domain reflectometry electrical receiver configured to receive an electrical sensing signal associated with the second optical signal portion and an electrical circuit configured to separate the electrical drive signal for the optical data signal and the electrical sensing signal associated with the second optical signal portion using at least one of time multiplexing or frequency multiplexing. In at least some example embodiments, the electrical circuit comprises an amplification path configured to connect the driver to the polarization sensitive photodetector and a detection path configured to connect the polarization sensitive photodetector to the optical time domain reflectometry electrical receiver, wherein the driver includes a time switch configured to switch the electrical circuit between use of the amplification path and use of the detection path. In at least some example embodiments, the optical communication device is configured to support continuous use of optical data communications and optical sensing based on continuous modulation of communications data by the polarization sensitive photodetector, based on continuous emission of optical power by a laser associated with the polarization sensitive photodetector, to form the optical data signals, continuous detection of received optical data signals by the polarization independent photodetector, modulation of a first optical amplifier to generate an optical time domain reflectometry signal, continuous driving of a second optical amplifier by a direct current driver to amplify the optical data signals and the optical time domain reflectometry signals, detection, by the polarization independent photodetector, of the received optical data signals and a back-reflected optical time domain reflectometry signal, and detection, by the optical time domain reflectometry electrical receiver via a low frequency path of the electrical circuit based on absorption of the back-reflected optical time domain reflectometry signal by the polarization sensitive photodetector, of the back-reflected optical time domain reflectometry signal. In at least some example embodiments, the optical communication device comprises an optical amplifier pair including a first optical amplifier configured to be modulated to generate an optical time domain reflectometry signal transmitted by the optical communication device and a second optical amplifier configured to support continuous amplification of both an optical data signal transmitted by the optical communication device and the optical time domain reflectometry signal transmitted by the optical communication device, an optical time domain reflectometry driver configured to generate an optical time domain reflectometry drive signal for the first optical amplifier, and a direct current driver configured to generate a direct current drive signal for the second optical amplifier. In at least some example embodiments, the optical communication device comprises at least one of an optical receiver or an optical transceiver. In at least some example embodiments, an apparatus includes a divider configured to separate, from a set of optical signals including an optical data communication signal and an optical testing signal, the optical testing signal, a circuit configured to, based on an electro-absorption modulated laser capability, convert the optical testing signal into an analysis signal, and a digital signal processor configured to determine, based on the analysis signal, at least one of polarization information for the optical testing signal or phase information for the optical testing signal.

In at least some example embodiments, an apparatus includes an optical communication device comprising means for splitting an optical signal into a first optical signal portion and a second optical signal portion, means for monitoring, based on the first optical signal portion, a power level of the optical signal, and means for monitoring, based on the second optical signal portion, a polarization of the optical signal. In at least some example embodiments, the means for monitoring, based on the first optical signal portion, the power level of the optical signal comprises a polarization independent photodetector and the means for monitoring, based on the second optical signal portion, the polarization of the optical signal comprises a polarization sensitive photodetector. In at least some example embodiments, the means for monitoring, based on the second optical signal portion, the polarization of the optical signal comprises a modulator-detector configured to support a modulation function and a detection function. In at least some example embodiments, the means for monitoring, based on the second optical signal portion, the polarization of the optical signal comprises a reversely-biased electro-absorption modulator based on quantum confined stark effect (QCSE). In at least some example embodiments, the means for monitoring, based on the second optical signal portion, the polarization of the optical signal comprises a polarization sensitive interferometric modulator and a detector, wherein a first side of the polarization sensitive interferometric modulator is connected to the divider and a second side of the polarization sensitive interferometric modulator is connected to the detector. In at least some example embodiments, the polarization sensitive interferometric modulator comprises a Mach-Zehnder modulator or a ring modulator. In at least some example embodiments, the optical communication device is configured to detect a change in the polarization of the optical signal based on a determination that a power level of the first optical signal portion remains relatively constant at the means for monitoring the power level of the optical signal, while an absorption level of the second optical signal portion at the means for monitoring the polarization of the optical signal varies. In at least some example embodiments, the optical communication device is configured to detect a condition or an event associated with an optical fiber based on one of a determination that a power level of the first optical signal portion varies at the means for monitoring the power level of the optical signal, or a determination that a power level of the first optical signal portion remains relatively constant at the means for monitoring the power level of the optical signal, while an absorption level of the second optical signal portion at the means for monitoring the polarization of the optical signal varies. In at least some example embodiments, the optical signal comprises a back-reflected optical time domain reflectometry signal received at the optical communication device. In at least some example embodiments, the optical signal comprises a monitoring optical signal received at the optical communication device from a remote optical communication device via an optical fiber. In at least some example embodiments, the optical signal comprises a wideband sensing signal including a first wavelength and a second wavelength, wherein the first optical signal portion is at the first wavelength and the second optical signal portion is at the second wavelength. In at least some example embodiments, the optical signal comprises a wavelength outside of a data transmission wavelength range used by the optical communication device for data transmissions, wherein the optical communication device is configured to support parallel operation of the data transmissions by the optical communication device and monitoring by the optical communication device based on the optical signal. In at least some example embodiments, the optical signal comprises a wavelength within a data transmission wavelength range used by the optical communication device for data transmissions, wherein the optical communication device is configured to switch between the data transmissions by the optical communication device and monitoring by the optical communication device based on the optical signal. In at least some example embodiments, the means for splitting the optical signal into the first optical signal portion and the second optical signal portion comprises a wavelength splitter, the optical communication device is configured to operate as both a data communication transceiver for optical data signals and an optical time domain reflectometry transceiver for optical time domain reflectometry signals, and the optical communication device further comprises means, disposed between the wavelength splitter and an optical fiber, for amplifying the optical data signals and the optical time domain reflectometry signals and means, connected to the means for monitoring the polarization of the optical signal, for generating light to be modulated in the means for monitoring the polarization of the optical signal for the optical data signals, wherein the wavelength splitter is configured to connect a first wavelength between the wavelength splitter and the means for monitoring the power of the optical signal and a second wavelength, different from the first wavelength, between the wavelength splitter and the means for monitoring the polarization of the optical signal. In at least some example embodiments, the optical communication device is configured to perform an optical time domain reflectometry test by supporting initiation of the optical time domain reflectometry test by means for switching off the means for generating light, means for stopping modulation of communications data by the means for monitoring the polarization of the optical signal, and means for modulating the means for amplifying to generate an optical time domain reflectometry pulse and means for supporting an optical time domain reflectometry measurement by receiving a back-reflected optical time domain reflectometry signal, detecting a reflected power of the back-reflected optical time domain reflectometry signal by the means for monitoring the power of the optical signal, and obtaining information on variation of polarization of the back-reflected optical time domain reflectometry signal based on detection of at least one polarization by the means for monitoring the polarization of the optical signal. In at least some example embodiments, the optical communication device further comprises means for providing an electrical drive signal for optical data signals, means for receiving an electrical sensing signal associated with the second optical signal portion, and means for separating the electrical drive signal for the optical data signal and the electrical sensing signal associated with the second optical signal portion using at least one of time multiplexing or frequency multiplexing. In at least some example embodiments, the means for separating the electrical drive signal for the optical data signal and the electrical sensing signal associated with the second optical signal portion comprises an amplification path for connecting the means for providing the electrical drive signal to the means for monitoring the polarization of the optical signal and a detection path for connecting the means for monitoring the polarization of the optical signal to the means for receiving the electrical sensing signal, wherein the means for providing the electrical drive signal includes means for switching the means for separating between use of the amplification path and use of the detection path. In at least some example embodiments, the optical communication device is configured to support continuous use of optical data communications and optical sensing based on continuous modulation of communications data by the means for monitoring the polarization of the optical signal, based on continuous emission of optical power by a laser associated with the means for monitoring the polarization of the optical signal, to form the optical data signals, continuous detection of received optical data signals by the means for monitoring the power of the optical signal, modulation of a first optical amplifier to generate an optical time domain reflectometry signal, continuous driving of a second optical amplifier by a direct current driver to amplify the optical data signals and the optical time domain reflectometry signals, detection, by the means for monitoring the polarization of the optical signal, of the received optical data signals and a back-reflected optical time domain reflectometry signal, and detection, by an optical time domain reflectometry electrical receiver via a low frequency path of an electrical circuit based on absorption of the back-reflected optical time domain reflectometry signal by the means for monitoring the polarization of the optical signal, of the back-reflected optical time domain reflectometry signal. In at least some example embodiments, the optical communication device comprises an optical amplifier pair including a first optical amplifier configured to be modulated to generate an optical time domain reflectometry signal transmitted by the optical communication device and a second optical amplifier configured to support continuous amplification of both an optical data signal transmitted by the optical communication device and the optical time domain reflectometry signal transmitted by the optical communication device, an optical time domain reflectometry driver configured to generate an optical time domain reflectometry drive signal for the first optical amplifier, and a direct current driver configured to generate a direct current drive signal for the second optical amplifier. In at least some example embodiments, the optical communication device comprises at least one of an optical receiver or an optical transceiver. In at least some example embodiments, an apparatus includes means for separating, from a set of optical signals including an optical data communication signal and an optical testing signal, the optical testing signal, means for converting, based on an electro-absorption modulated laser capability, the optical testing signal into an analysis signal, and means for determining, based on the analysis signal, at least one of polarization information for the optical testing signal or phase information for the optical testing signal.

### BRIEF DESCRIPTION OF THE DRAWINGS

The teachings herein can be readily understood by considering the following detailed description in conjunction with the accompanying drawings, in which:
FIG. 1 depicts an example embodiment of a passive optical network (PON) including an optical line terminal (OLT) and a set of optical network units (ONUs) configured to support various optical monitoring and sensing functions;
FIG. 2 depicts an example embodiments of an optical communication device configured to support various optical monitoring and sensing functions in various contexts based on use of a polarization independent photodetector and a polarization sensitive photodetector;
FIG. 3 depicts an example embodiment of an optical communication device including an optical transceiver configured to operate as a polarization sensitive OTDR receiver where the polarization sensitive photodetector includes an electro-absorption modulator (EAM);
FIG. 4 depicts an example embodiment of an optical communication device including an optical transceiver configured to operate as a polarization sensitive OTDR transceiver where the polarization sensitive photodetector includes an electro-absorption modulator (EAM);
FIG. 5 depicts an example embodiment of an electronic circuit configured to support separation of modulated optical data signals and detected back-reflected sensing signals at the EAM of the optical transceivers of FIG. 3 and FIG. 4;
FIG. 6 depicts an example embodiment of an optical communication device including an optical transceiver based on a dual-section amplifier and including an electronic circuit configured to support separation of modulated optical data signals and detected back-reflected sensing signals;
FIG. 7 depicts an example embodiment of an optical communication device including an optical transceiver based on a dual-section amplifier and including dedicated components configured to support separation of modulated optical data signals and detected back-reflected sensing signals;
FIG. 8 depicts an example embodiment of a method for use by an optical communication device for supporting optical monitoring for monitoring power of an optical signal and polarization of an optical signal;
FIG. 9 depicts an example embodiment of an optical communication device including an optical transceiver configured to support optical power, polarization, and phase monitoring, where optical polarization and phase monitoring is based on electrical multiplexing of a sensing signal and subsequent processing of a mixed signal in the electrical domain;
FIG. 10 depicts an example embodiment of an optical communication device including an optical transceiver configured to support optical power, polarization, and phase monitoring, where optical polarization and phase monitoring is based on electrical multiplexing of a sensing signal and subsequent processing of a mixed signal in the electrical domain;
FIG. 11 depicts an example embodiment of an optical communication device including an optical transceiver configured to support optical power, polarization, and phase monitoring, where optical polarization and phase monitoring is based on optical multiplexing of a sensing signal and subsequent processing of a mixed signal in the electrical domain;
FIG. 12 depicts an example embodiment of an optical communication device including an optical transceiver configured to support optical power, polarization, and phase monitoring, where optical polarization and phase monitoring is based on optical multiplexing of a sensing signal and subsequent processing of a mixed signal in the electrical domain;
FIG. 13 depicts an example embodiment of an optical communication device including an optical transceiver configured to support optical power, polarization, and phase monitoring, where optical polarization and phase monitoring is based on optical multiplexing of a sensing signal and subsequent processing of a mixed signal in the electrical domain;
FIG. 14 depicts an example embodiment of a method for use by an optical communication device for supporting optical monitoring for monitoring polarization of an optical signal and phase of an optical signal; and
FIG. 15 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting optical monitoring and sensing for an optical network are presented. Various example embodiments for supporting optical monitoring and sensing for an optical network may be configured to support various optical network monitoring techniques configured to support monitoring of an optical network (e.g., to support detection, localization, and/or identification of events, such as fiber defects, fiber cuts, vibrations indicative of work which could result in fiber cuts, and so forth) and/or various optical network sensing techniques configured to support sensing on an optical network (e.g., for localized acoustic or vibrational sensing of conditions such as natural phenomena (e.g., earthquakes, landslides, and so forth), human activity (e.g., construction activity, vibrations from railways, and so forth), or the like. Various example embodiments for supporting optical monitoring and sensing for an optical network may be configured to support optical monitoring and sensing for an optical access network, such as a passive optical network.

Monitoring and sensing based on optical access networks, such as passive optical networks, is becoming more important for various reasons. For example, as the deployment of optical access networks continues to spread, monitoring of the optical access networks enables the network operators to reduce or optimize operation expenses when faults can be detected and localized without dispatching technicians. For example, as the deployment of optical access networks continues to spread, sensing of the optical access networks provides much broader geographic coverage for detection of various environmental parameters, such as natural phenomena (e.g., earthquakes, landslides, and so forth), human activity (e.g., construction activity, vibrations from railways, and so forth), or the like. However, monitoring and sensing for optical access networks is currently limited based on various aspects of the optical access networks.

Optical access networks, such as passive optical networks, are commonly based on direct detection (e.g., intensity modulation with direct detection (IM-DD)), rather than coherent detection, as direct detection techniques are currently much more cost-effective than coherent detection techniques. Direct detection techniques, however, do not currently provide access to the entire optical field (i.e., intensity, polarization, and phase) due to the polarization insensitivity and loss of phase information when direct detection techniques are used. Additionally, classical optical time domain reflectometry (OTDR) measurements generally can extract only limited information (e.g., extreme cases such as heavy losses at a connector and fiber breakage from detection of large signal intensity changes) and cannot provide more subtle information such as evolution of the optical signal before breakage occurs for fault prediction or use of the PON as a sensor, because such monitoring and sensing generally requires extraction of polarization and/or phase information in addition to the intensity information.

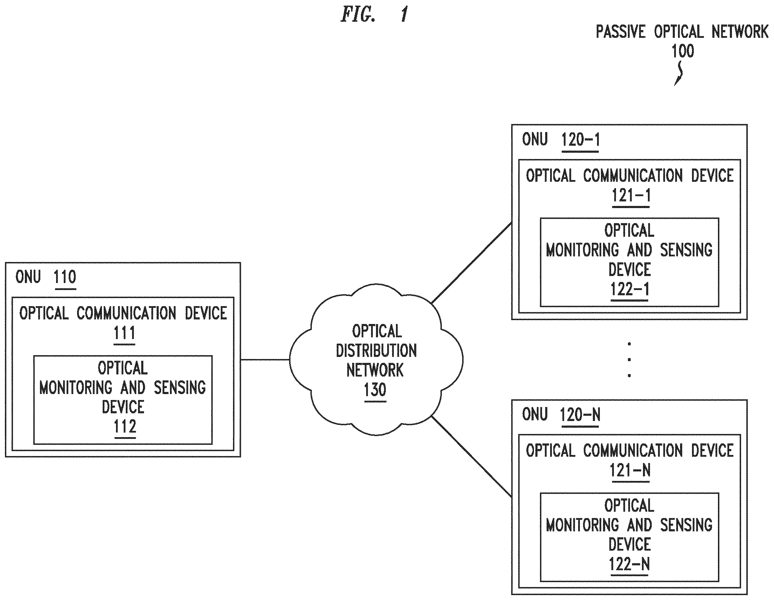

Various example embodiments for supporting optical monitoring and sensing for an optical access network based on direct detection (e.g., an IM-DD PON) may be configured to support relatively low-cost optical monitoring and sensing based on extraction of information of the entire optical field (i.e., intensity, polarization, and phase) using various components already used within IM-DD PON transceivers (e.g., based on the polarization dependency of and retrieving optical phase based on existing optical components without the need for dedicated polarization components, although it will be appreciated that such components may be included for various purposes). Various example embodiments may be configured to support optical monitoring and sensing within a DD-based PON based on an optical transceiver sensitive to both total power of optical signals and polarization of optical signals without the need for use of any dedicated polarization components (e.g., polarization splitters and polarization rotators) or coherent receivers, which generally are complex and expensive, thereby enabling cost-effective monitoring and sensing with the DD-based PON with more information than traditional OTDR and less complexity than optical transceivers employing polarization components or coherent receivers. Various example embodiments may be configured to take advantage of the diversity of individual functions available within existing and expected future optical transceiver designs to reuse the functions as sensing elements including sensing elements that are independent of polarization for monitoring power levels and sensing elements that are sensitive to polarization for monitoring polarization, there enabling use of the optical transceivers to monitor aspects of the entire optical field (i.e., intensity, polarization, and phase) for providing improved optical monitoring and sensing capabilities. It will be appreciated that these and various other example embodiments for supporting monitoring and sensing of an optical network may be further understood by way of reference to FIG. 1, which illustrates an example embodiment of a that is PON configured to support various optical monitoring and sensing techniques presented herein.

FIG. 1 depicts an example embodiment of a passive optical network (PON) including an optical line terminal (OLT) and a set of optical network units (ONUs) configured to support various optical monitoring and sensing functions.

The PON 100 may be configured to provide network access to a set of customers, based on optical communications, in various contexts and based on various technologies. For example, the PON 100 may operate as a point-to-multipoint (P2MP) data distribution system configured to provide broadband network access over "the last mile" for customers (e.g., the final portion of a telecommunications network that supports communications for customers, including delivering communications to the customers and supporting communications from the customers). For example, the PON 100 may operate using various types of PON technologies and various PON standards (e.g., the G.9804 standard for 50G PON). For example, the PON 100 may be based on direct detection (e.g., based on intensity modulation with direct detection (IM-DD) or other suitable types of direct detection techniques). It will be appreciated that the PON 100 may be used in various other contexts, configured based on various other PON technologies and/or PON standards, or the like, as well as various combinations thereof.

The PON 100 may include various communication elements configured to support optical communications. The PON 100 includes an optical line terminal (OLT) 110 and a set of optical network units (ONUs) 120-1 - 120-N (collectively, ONUs 120) connected via an optical distribution network (ODN) 130. The PON 100 may be configured to support downstream (DS) communications from the OLT 110 to the ONUs 120 via the ODN 130 and upstream (US) communications from the ONUs 120 to the OLT 110 via the ODN 130. The PON 100, as discussed further below, may be configured to support DS communications from the OLT 110 to the ONUs 120 and US communications from the ONUs 120 to the OLT 110 based on application of dual-polarization to one or more wavelengths to provide various combinations of wavelengths and polarizations. It will be appreciated that the PON 100 may include various other elements (which have been omitted for purposes of clarity).

The OLT 110 is configured to support communications between the ONUs 120 and one or more upstream networks (omitted for purposes of clarity). The OLT 110 may be located in a central location, such as a central office (CO) or other suitable location. For example, the one or more upstream networks may include one or more core communication networks configured to support communications of the OLT 110 and, thus, of the ONUs 120. For example, the one or more upstream networks may include the Internet, data center networks, enterprise networks, or the like, as well as various combinations thereof. For example, the OLT 110 may be configured to forward data received from the one or more upstream networks downstream toward the ONUs 120 via the ODN 130 and to forward data received from the ONUs 120 via the ODN 130 upstream toward the one or more upstream networks. The OLT 110 includes an optical communication device 111 configured to support DS communications to the ONUs 120 and US communications from the ONUs 120. For example, the optical communication device 111 may include an optical transceiver, an optical transmitter, an optical receiver, or the like, as well as various combinations thereof. The optical communication device 111 includes an optical monitoring and sensing device 112 (which, although depicted as a standalone element, may be fully or at least partially integrated with the optical communication device 111, with or without reusing some or all of the elements of the optical communication device 111) that is configured to support various optical monitoring and sensing techniques as presented herein. It will be appreciated that the OLT 110 may include various other elements configured to support optical communications within the PON 100.

The ONUs 120 each are configured to support communications between the OLT 110 and one or more downstream networks or devices (omitted for purposes of clarity). The ONUs 120 may be located at respective user premises or other suitable locations. For example, the one or more downstream networks or devices for an ONU 120 may include one or more local area networks (LANs) of the customer, one or more communication devices of the customer (e.g., a modem, a router, a switch, a set top box, a smart television, a gaming system, a computer, a smartphone, or the like, as well as various combinations thereof). For example, an ONU 120 may be configured to forward data received from the OLT 110 via the ODN 130 downstream toward one or more downstream networks or devices and to forward data received from the one or more downstream networks or devices upstream toward the OLT 110 via the ODN 130. The ONUs 120-1 - 120-N include a set of optical communication devices 121-1 - 121-N (collectively, optical communication devices 121), respectively, configured to support DS communications from the OLT 110 and US communications to the OLT 110. The ONUs 120-1 - 120-N include a set of optical monitoring and sensing devices 122-1 - 122-N (collectively, optical monitoring and sensing devices 122 which, although depicted as standalone elements, may be fully or at least partially integrated with the optical communication devices 111, with or without reusing some or all of the elements of the optical communication devices 111) that are configured to support various optical monitoring and sensing techniques as presented herein. It will be appreciated that the ONUs 120 may include various other elements configured to support optical communications within the PON 100.

The ODN 130 may be a data distribution system configured to support communications between the OLT 110 and the ONUs 120, including DS communications from the OLT 110 to the ONUs 120 and US communications from the ONUs 120 to the OLT 110. The ODN 130, for purposes of clarity, is simply depicted as an optical fiber or set of optical fibers configured to support propagation of optical signals downstream from the OLT 110 to the ONUs 120 and upstream from the ONUs 120 to the OLT 110; however, it will be appreciated that the ODN 130 may be implemented using various different components which may be arranged in various different configurations. For example, the ODN 130 may include various passive optical components (e.g., optical fibers, optical couplers, optical splitters, and the like) which do not require power to distribute data signals between the OLT 110 and the ONUs 120. For example, the ODN 130 may be implemented using a branching configuration or other suitable P2MP configurations. It will be appreciated that the ODN 130 may include various other elements for supporting communications between the OLT 110 and the ONUs 120.

It will be appreciated that various example embodiments of optical monitoring and sensing functions presented herein, although primarily presented herein within the context of the PON 100 of FIG. 1, may be provided in various other types of optical communication network or optical communication contexts.

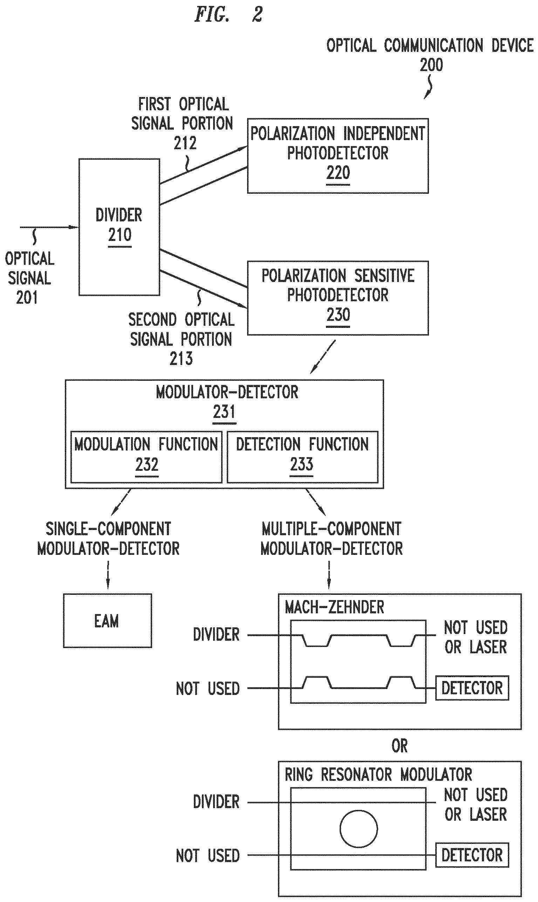

Various example embodiments of optical communication devices presented herein may be configured to support monitoring of polarization in addition to monitoring of power. It will be appreciated that at least some such example embodiments for supporting monitoring of polarization in addition to monitoring of power at optical communication devices are presented with respect to FIGs. 2 - 8.

FIG. 2 depicts an example embodiments of an optical communication device configured to support various optical monitoring and sensing functions in various contexts based on use of a polarization independent photodetector and a polarization sensitive photodetector.

The optical communication device 200 includes a divider 210, a polarization independent photodetector 220, and a polarization sensitive photodetector 230. The divider 210 is configured to receive an optical signal 201 (e.g., a back-reflected OTDR signal back-reflected to the optical communication device 200 where the optical communication device 200 performs optical monitoring or sensing based on OTDR-based optical signals, a remote optical monitoring signal received at the optical communication device 200 from a remote optical communication device where the optical communication device 200 performs optical monitoring or sensing based on remotely received optical signals, or the like) and to split the optical signal 201 received at the divider 210 into a first optical signal portion 212 that is provided to the polarization independent photodetector 220 and a second optical signal portion 213 that is provided to the polarization sensitive photodetector 230. The polarization independent photodetector 220 is configured to monitor a power level of the optical signal 201 based on the first optical signal portion 212 (e.g., based on monitoring of a power level of the first optical signal portion 212). The polarization sensitive photodetector 230 is configured to monitor a polarization of the optical signal 201 based on the second optical signal portion 213 (e.g., based on monitoring of the polarization of the second optical signal portion 213).

The divider 210, as indicated above, is configured to receive an optical signal 201 (e.g., a back-reflected OTDR signal back-reflected to the optical communication device 200 where the optical communication device 200 performs optical monitoring or sensing based on OTDR-based optical signals, a remote optical monitoring signal received at the optical communication device 200 from a remote optical communication device where the optical communication device 200 performs optical monitoring or sensing based on remotely received optical signals, or the like) and to split the optical signal 201 received at the divider 210 into a first optical signal portion 212 that is provided to the polarization independent photodetector 220 and a second optical signal portion 213 that is provided to the polarization sensitive photodetector 230. The divider 210 may be implemented in various ways, which may depend on various factors (e.g., whether the optical monitoring and data communications share a wavelength(s), implementation of the optical monitoring functions, or the like). For example, the divider 210 may be an optical splitter, a wavelength-selective optical splitter, a duplexer, a triplexer, or the like. It will be appreciated that the divider 210 may be implemented in other ways.

The polarization independent photodetector 220, as indicated above, is configured to monitor a power level of the optical signal 201 based on the first optical signal portion 212 (e.g., based on monitoring of a power level of the first optical signal portion 212) that is received from the divider 210. The polarization independent photodetector 220 may be implemented in various ways. For example, the polarization independent photodetector 220 may be implemented as a PI-N photodiode, a photo transistor, or other suitable type of polarization independent photodetector element. It will be appreciated that the polarization independent photodetector 220 may be implemented in various other ways.

The polarization sensitive photodetector 230, as indicated above, is configured to monitor a polarization of the optical signal 201 based on the second optical signal portion 213 (e.g., based on monitoring of the polarization of the second optical signal portion 213) that is received from the divider 210. The polarization sensitive photodetector 230 may be implemented in various ways as discussed further below. For example, as further illustrated in FIG. 2, the polarization sensitive photodetector 230 may be implemented as a modulator-detector 231 configured to support a modulation function 232 and a detection function 232. The modulator-detector 231 may be implemented using a single component to provide the modulation function 232 and the detection function 233 or may be implemented using multiple components to provide the modulation function 232 and the detection function 233 (e.g., a modulator component configured to provide the modulation function 232 and a detector component configured to provide the detection function 233). For example, the modulator-detector 231 may be implemented using a single component configured to support the modulation function 232 and the detection function 233 (e.g., a reversely-biased electro-absorption modulator (EAM) based on quantum confined stark effect (QCSE) or other component configured to support modulation and detection capabilities). For example, the modulator-detector 231 may be implemented using multiple components, such as by using a modulator (e.g., a polarization sensitive interferometric modulator, such as a Mach-Zehnder modulator, a ring modulator, or the like) to provide the modulation function 232 and a detector (e.g., a photodiode or other detector) to provide the detection function 233. It will be appreciated that the polarization sensitive photodetector 230 may be implemented in various other ways.

The optical communication device 200, as indicated above, is configured to support various optical monitoring and sensing functions based on monitoring of the optical signal 201. The optical communication device 200 may be configured to detect a change in the power level of the optical signal 201 based on a determination that the power level of the first optical signal portion 212 changes at the polarization independent photodetector 220. The optical communication device 200 may be configured to detect a change in the polarization of the optical signal 201 based on a determination that the power level of the first optical signal portion 212 remains relatively constant at the polarization independent photodetector 220 while an absorption level of the polarization sensitive photodetector 230 for the second optical signal portion 213 varies. For example, the determination as to whether the power level remains "relatively constant" at the polarization independent photodetector 220 may be based on a measure of the percentage of variation of the power versus polarization change where the percentage that is used as the threshold may be different in different contexts (e.g., less than 30% of the power versus polarization change is deemed to be relatively constant, less than 20% of the power versus polarization change is deemed to be relatively constant, or the like). For example, the determination as to whether the absorption level of the polarization sensitive photodetector 230 "varies" may be based on a factor of the variation relative to polarization change where the factor that is used as the threshold may be different in different contexts (e.g., variation of at least a factor of five, variation of at least a factor of 10, or the like). It is noted that, here, characteristics of the first optical signal portion 212 at the polarization independent photodetector 220 and characteristics of the second optical signal portion 213 at the polarization sensitive photodetector 230 are used as proxies for the monitoring the power and polarization characteristics of the optical signal 201 and, accordingly, may be used to identify various conditions or events associated with the optical fiber on which the optical signal 201 is propagating. It will be appreciated that the optical communication device 200 may be configured to support various other optical monitoring and/or sensing functions for detecting various other conditions and/or event associated with optical fibers.

The optical communication device 200 may configured to detect, for an optical fiber on which the optical signal 201 is received, a condition associated with the optical fiber (e.g., a torsion of the optical fiber before breakage of the optical fiber, breakage of the optical fiber, or the like) or an event associated with an optical fiber (e.g., an earthquake, a landslide, construction activity, or the like). For example, a major degradation of service on an optical fiber may be detected based on a determination that the power level of the optical signal 201 varies (e.g., based on a determination that the power level of the first optical signal portion 212 varies at the polarization independent photodetector 220). For example, a potential degradation of service on an optical fiber (e.g., a polarization effect due to a torsion in the optical fiber before breakage of the optical fiber) may be detected based on a determination that the power level of the optical signal 201 remains relatively constant (e.g., based on a determination that the power level of the first optical signal portion 212 remains relatively constant at the polarization independent photodetector 220) while a polarization of the optical signal 201 varies (e.g., based on a determination that an absorption level of the second optical signal portion 213 at polarization sensitive photodetector 230 varies). It will be appreciated that the monitoring of the power and/or polarization of the optical signal 201 also may be employed to use the optical fiber as a sensor for sensing various events (e.g., an earthquake, a landslide, construction, or the like). It will be appreciated that the optical communication device 200 may be configured to support various other optical monitoring and/or sensing functions for detecting various other conditions and/or event associated with optical fibers.

The optical communication device 200 may be implemented as an optical communication node (e.g., an OLT or an ONU in a PON, or other optical communication nodes in various other optical communication networks or optical communication contexts) or as a portion of an optical communication node (e.g., an OLT or an ONU in a PON, or other optical communication nodes in various other optical communication networks or optical communication contexts) in various ways. For example, where the optical communication device 200 is implemented as a portion of an optical communication node, the optical communication device 200 may be implemented as an optical receiver or a portion of an optical receiver (e.g., an OTDR receiver, a combined data and OTDR receiver, or the like), as an optical transceiver or a portion of an optical transceiver (e.g., an OTDR transceiver, a combined data and OTDR transceiver, or the like), or the like. For example, depending on the implementation of the optical communication device 200, the divider 210 may be an optical splitter, a wavelength-selective optical splitter, a duplexer, a triplexer, or the like. For example, depending on the implementation of the optical communication device 200, the polarization independent photodetector 220 may be a PIN photodiode or other suitable type of polarization independent photodetector element. For example, depending on the implementation of the optical communication device 200, the polarization sensitive photodetector 230 may be a reversely-biased EAM based on QCSE or other suitable type of polarization sensitive photodetector element. It will be appreciated that the optical communication device 200 may be implemented as an optical communication node or a portion of an optical communication node in various other ways.

It will be appreciated that the optical communication device 200 may be integrated into various optical nodes in various ways to support various optical monitoring and sensing functions as presented herein.

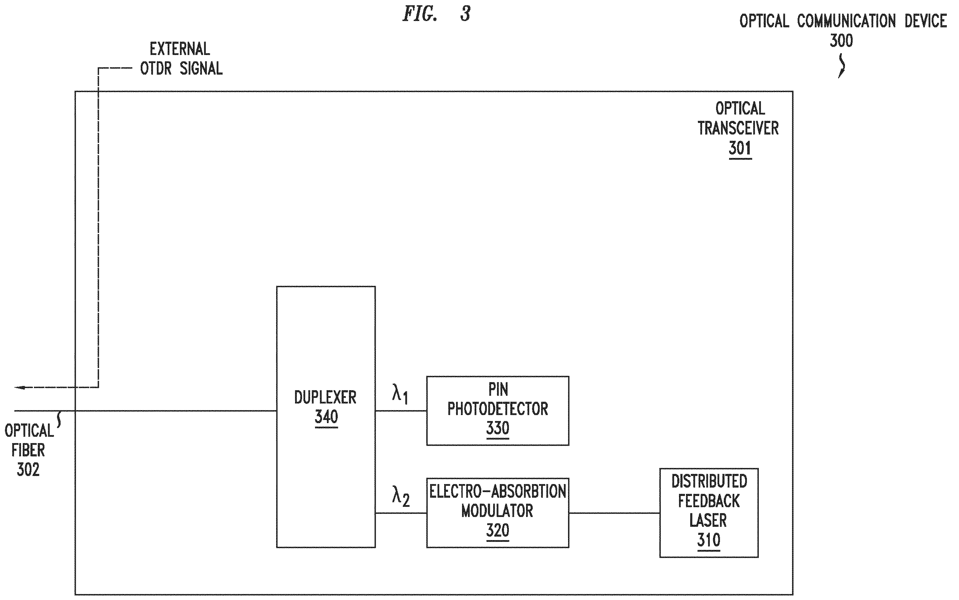

FIG. 3 depicts an example embodiment of an optical communication device including an optical transceiver configured to operate as a polarization sensitive OTDR receiver where the polarization sensitive photodetector includes EAM.

The optical communication device 300 includes an optical transceiver 301, and represents an integration of the optical communication device 200 of FIG. 2 into an optical transceiver. The optical transceiver 301 is configured to support optical data communications as well as OTDR measurements (e.g., for monitoring power and polarization), and may be configured to support optical data communications and OTDR measurements simultaneously (e.g., using a dedicated wavelength, outside of the range of wavelengths used for optical data communications, for the OTDR measurements) or separately (e.g., switching between optical data communications and OTDR measurements based on time division multiplexing between the optical data communications and the OTDR measurements). The optical transceiver 301 includes an optical fiber 302, a distributed feedback (DFB) laser 310, an electro-absorption modulator (EAM) 320, a PIN photodetector 330, and a duplexer 340. The optical transceiver 301 is considered to be operated as a polarization sensitive OTDR receiver since an external OTDR source, rather than the optical transceiver 301, is used to generate the OTDR signal that is transmitted into the optical fiber 302 to trigger creation of the back-reflected OTDR signal.

The optical transceiver 301, during optical data communications, is configured to support transmission of optical data signals toward the remote optical node(s) and reception of optical data signals from the remote optical node(s). The optical transceiver 301 is configured to transmit data toward the remote optical node(s) using the DFB laser 310, the EAM 320, and the duplexer 340, such as where the DFB laser 310 provides an optical signal, the EAM 320 modulates the data onto the optical signal to form an optical data signal, and the duplexer 340 directs the optical data signal onto the optical fiber 302 for propagation toward the remote optical node(s). The optical transceiver 301 is configured to receive data from the remote optical node(s) using the duplexer 340 and the PIN photodetector 330, such as where the duplexer 340 receives optical data signals on the optical fiber 302 and directs the optical data signals to the PIN photodetector 330 for detection of the optical data signals and recovery of data transmitted by the remote optical node(s). It will be appreciated that the optical transceiver 301 may include other elements which may be involved in supporting communication of data by the optical transceiver 301 of the optical communication device 300.

The optical transceiver 301, during OTDR measurements, sends an OTDR signal via the optical fiber 302 and receives a back-reflected OTDR signal via the optical fiber 302. The duplexer 340 receives the back-reflected OTDR signal and provides a first portion of the back-reflected OTDR signal to the PIN photodetector 330 and a second portion of the back-reflected OTDR signal to the EAM 320. The PIN photodetector 330 is sensitive to the power of light and, thus, can monitor the power level of the back-reflected OTDR signal by monitoring the power of the light in the first portion of the back-reflected OTDR signal. The EAM 320 has an absorption that is highly sensitive to the polarization of light and, thus, can monitor changes in the polarization of the back-reflected OTDR signal by monitoring the polarization of the light in the second portion of the back-reflected OTDR signal. Here, the EAM 320 which is typically used for high speed data modulation (as described above for the optical data communications case) is being reused as a polarization sensitive detector, thereby enabling support for polarization monitoring using an existing optical transceiver component). As a result, use of the PIN photodetector 330 and the EAM 320 enables simultaneous monitoring of the total power and variation of polarization of the incoming back-reflected OTDR signal (e.g., if the total power remains constant in the PIN photodetector 330 but the absorption in the EAM 320 varies, this means that the polarization is changing). In this manner, the optical transceiver 301 is able to support monitoring of both power and polarization characteristics of light propagating on the optical fiber 302.

The optical transceiver 301, for OTDR measurements, may be configured to support use of various types of OTDR source signals which may be utilized to trigger creation of the back-reflected OTDR signal for supporting the OTDR measurements at the optical transceiver 301. For example, the OTDR signal may be a wideband sensing signal (e.g., covering λ₁ and λ₂ within the passband filter of the duplexer 340), where (1) the signal at wavelength λ₁ will be detected by the PIN photodetector 330 (which is the receiver part of the data transceiver), which is polarization independent and (2) the signal at wavelength λ₂ will be detected by the reversely-biased EAM 320, which acts as a photodiode during the sensing measurement, but is polarization independent. The external OTDR source that provides the OTDR signal sent over the optical fiber 302 may be a single broadband emitter covering wavelengths λ₁ and λ₂, two emitters at wavelength λ₁ and λ₂, or a single external emitter at one of the wavelengths (either λ₁ or λ₂) with the other of the wavelengths (the other of λ₁ or λ₂) being provided by a different source (e.g., a different external source or even the DFB laser 310). It will be appreciated that various other types of OTDR source signals may be utilized to trigger creation of the back-reflected OTDR signal for supporting the OTDR measurements at the optical transceiver 301.

It will be appreciated that the optical communication device 301 may be utilized within the context of various optical communication networks, such as within the PON 100 of FIG. 1 (e.g., where the optical communication device 300 may be used as the optical communication device 111 within the OLT 110 or as one of the optical communication devices 121 within one of the ONUs 120). In this case, the optical transceiver 301 may be implemented as a relatively simple DD-based optical transceiver that can be used to detect polarization effects within the ODN 130 without the addition of optical components to the optical transceiver 301 for purposes of supporting detection of polarization effects within the ODN 130 (e.g., based on use of the existing EAM 320, which would already be present within the DD-based optical transceiver for modulation of data onto optical signals for communication of the data via the optical network, as a polarization sensitive photodetector to support detection of polarization effects without the need to incorporate additional optical components within DD-based optical transceiver).

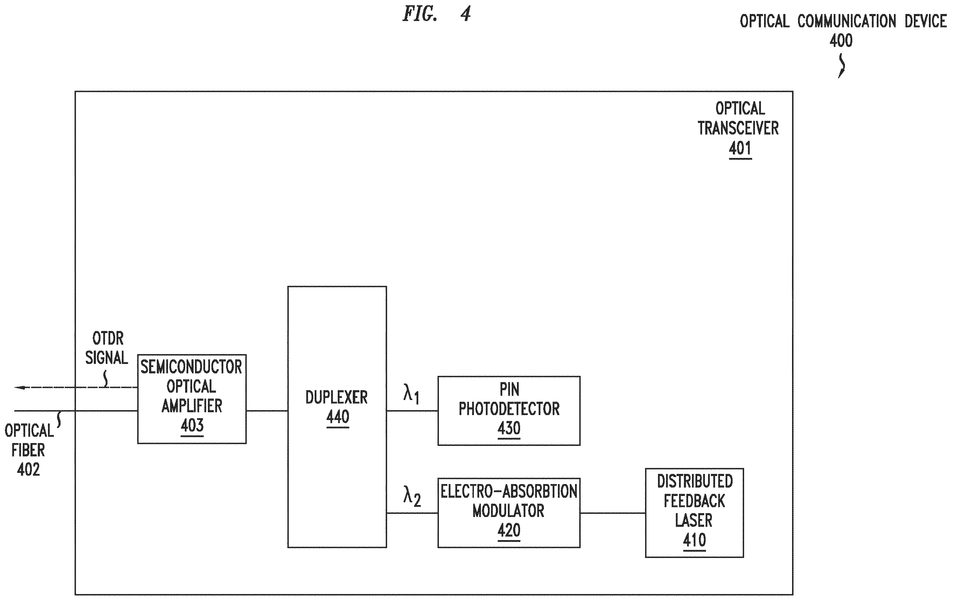

FIG. 4 depicts an example embodiment of an optical communication device including an optical transceiver configured to operate as a polarization sensitive OTDR transceiver where the polarization sensitive photodetector includes an EAM.

The optical communication device 400 includes an optical transceiver 401, and represents an integration of the optical communication device 200 of FIG. 2 into the optical transceiver 401. The optical transceiver 401 is configured to support optical data communications as well as OTDR measurements (e.g., for monitoring power and polarization), and may be configured to support optical data communications and OTDR measurements simultaneously (e.g., using a dedicated wavelength, outside of the range of wavelengths used for optical data communications, for the OTDR measurements) or separately (e.g., switching between optical data communications and OTDR measurements based on time division multiplexing between the optical data communications and the OTDR measurements). The optical transceiver 401 includes an optical fiber 402, a DFB laser 410, an EAM 420, a PIN photodetector 430, and a duplexer 440. The optical transceiver 401 is configured to support reuse of components (e.g., the EAM 420 and the PIN photodetector 430) for both optical data communications and OTDR measurements.

The optical transceiver 401, during optical data communications, is configured to support transmission of optical data signals toward the remote optical node(s) and reception of optical data signals from the remote optical node(s). The optical transceiver 401 is configured to transmit data toward the remote optical node(s) using the DFB laser 410, the EAM 420, and the duplexer 440, such as where the DFB laser 410 provides an optical signal, the EAM 420 modulates the data onto the optical signal to form an optical data signal, and the duplexer 440 directs the optical data signal onto the optical fiber 402 for propagation toward the remote optical node(s). The optical transceiver 401 is configured to receive data from the remote optical node(s) using the duplexer 440 and the PIN photodetector 430, such as where the duplexer 440 receives optical data signals on the optical fiber 402 and directs the optical data signals to the PIN photodetector 430 for detection of the optical data signals and recovery of data transmitted by the remote optical node(s). It will be appreciated that the optical transceiver 401 may include other elements which may be involved in supporting communication of data by the optical transceiver 401 of the optical communication device 400.

The optical transceiver 401, during OTDR measurements, sends an OTDR signal via the optical fiber 402 and receives a back-reflected OTDR signal via the optical fiber 402. The duplexer 440 receives the back-reflected OTDR signal and provides a first portion of the back-reflected OTDR signal to the PIN photodetector 430 and a second portion of the back-reflected OTDR signal to the EAM 420. The PIN photodetector 430 is sensitive to the power of light and, thus, can monitor the power level of the back-reflected OTDR signal by monitoring the power of the light in the first portion of the back-reflected OTDR signal. The EAM 420 has an absorption that is highly sensitive to the polarization of light and, thus, can monitor changes in the polarization of the back-reflected OTDR signal by monitoring the polarization of the light in the second portion of the back-reflected OTDR signal. Here, the EAM 420 which is typically used for high speed data modulation (as described above for the optical data communications case) is being reused as a polarization sensitive detector, thereby enabling support for polarization monitoring using an existing optical transceiver component). As a result, use of the PIN photodetector 430 and the EAM 420 enables simultaneous monitoring of the total power and variation of polarization of the incoming back-reflected OTDR signal (e.g., if the total power remains constant in the PIN photodetector 430 but the absorption in the EAM 420 varies, this means that the polarization is changing). In this manner, the optical transceiver 401 is able to support monitoring of both power and polarization characteristics of light propagating on the optical fiber 402.

The optical transceiver 401, unlike the optical transceiver 301 of FIG. 3 (which uses an external OTDR source to generate the OTDR signal), is configured to generate the OTDR signal. The optical transceiver 401, unlike the optical transceiver 301 of FIG. 3, further includes a semiconductor optical amplifier (SOA) 403 that is disposed between the duplexer 440 and the optical fiber 402. The SOA 403 is configured to support amplification of optical data signals communicated by the optical transceiver 401 (e.g., to provide sufficient transmit power for optical data signals transmitted by the optical transceiver 401 via the optical fiber 402 and as a preamplifier to provide sufficient sensitivity for optical data signals received by the optical transceiver 401 via the optical fiber 402), as well as to operate as an OTDR signal source for generation of the OTDR signal that is transmitted into the optical fiber 402 to trigger creation of the back-reflected OTDR signal for OTDR measurements at the optical transceiver 401. It will be appreciated that use of the SOA 402 as a broadband OTDR emitter enables operation of the optical transceiver 401 as a dual usage transceiver which can act as a classical data transceiver as well as an advanced OTDR sensing element.

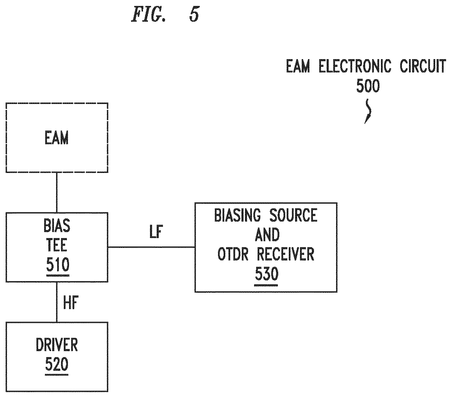

FIG. 5 depicts an example embodiment of an electronic circuit configured to support separation of modulated optical data signals and detected back-reflected sensing signals at the EAM of the optical transceivers of FIG. 3 and FIG. 4. The EAM electronic circuit 500 is configured to support separation of modulated optical data signals and back-reflected sensing signals. The electronic circuit includes a bias tee 510 which is configured to be connected to an EAM, a driver 520 that is connected to the bias tee 510 through a high frequency (HF) path, and a biasing source and OTDR receiver 530 that is connected to the bias tee 510 through a low frequency path. The driver 520 is configured to send data to the EAM, through the HF path of the bias tee 510, for modulation on optical signals (e.g., from a DFB laser associated with the EAM). The biasing source and OTDR receiver 530 is configured to detect back-reflected OTDR signals absorbed in the EAM, through the LF path of the bias tee 510, for determining whether the power level of the back-reflected OTDR signals is constant or varying. The EAM electronic circuit 500 is configured to support separation of modulated optical data signals and back-reflected sensing signals without degrading the HF path of the EAM electronic circuit 500.

It will be appreciated that, although primarily presented with respect to example embodiments in which separation of the modulated optical data signals and the detected back-reflected sensing signals at the EAM of an optical transceiver is based on the HF path and the LF path of the bias tee 510, in at least some example embodiments separation of the modulated optical data signals and the detected back-reflected sensing signals at the EAM of an optical transceiver may be based on use of a time switch that selects either the amplification path for the modulated optical data signals or the detected path for the detected back-reflected sensing signals in the EAM electronic circuit 500 based on time division multiplexing. For example, separation of the modulated optical data signals and the detected back-reflected sensing signals at the EAM of an optical transceiver may be based on use of a time switch in the driver 510 of the electronic circuit. For example, time division multiplexing may allocate one out of every one hundred frames, thereby supporting use of the optical transceiver for sensing every 12.5 ms. It will be appreciated that separation of the modulated optical data signals and the detected back-reflected sensing signals at the EAM of an optical transceiver may be implemented in other ways.

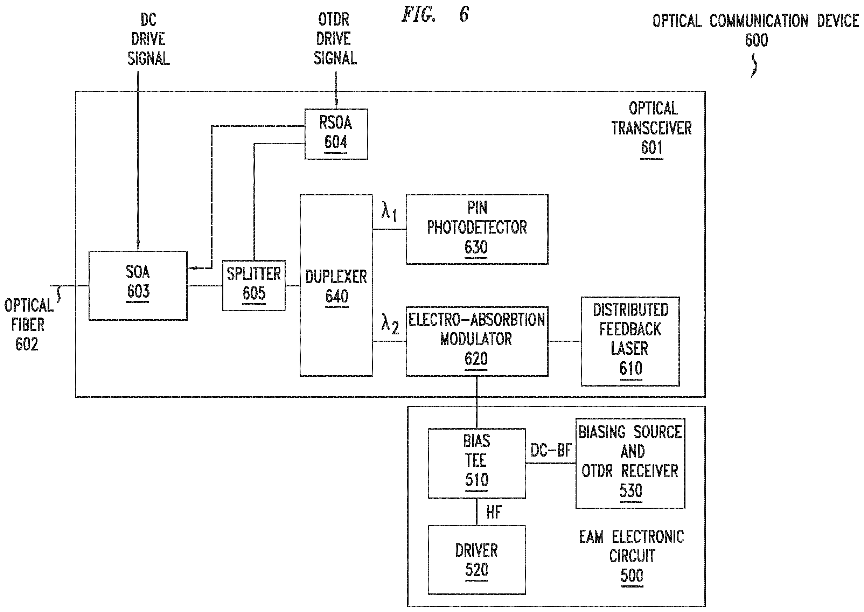

FIG. 6 depicts an example embodiment of an optical communication device including an optical transceiver based on a dual-section amplifier and including an electronic circuit configured to support separation of modulated optical data signals and detected back-reflected sensing signals.

The optical communication device 600 includes an optical transceiver 601, and represents an integration of the optical communication device 200 of FIG. 2 into an optical transceiver. The optical transceiver 601 is configured to support optical data communications as well as OTDR measurements (e.g., for monitoring power and polarization), and may be configured to support optical data communications and OTDR measurements simultaneously (e.g., using a dedicated wavelength, outside of the range of wavelengths used for optical data communications, for the OTDR measurements) or separately (e.g., switching between optical data communications and OTDR measurements based on time division multiplexing between the optical data communications and the OTDR measurements). The optical transceiver 601 includes an optical fiber 602, a semiconductor optical amplifier (SOA) 603, a reflective SOA (RSOA) 604 (which, alternatively, may be an SOA), a splitter 605, a DFB laser 610, an EAM 620, a PIN photodetector 630, and a duplexer 640. The optical transceiver 601 is configured to support reuse of components (e.g., the EAM 620 and the PIN photodetector 630) for both optical data communications and OTDR measurements.

The optical transceiver 601, during optical data communications, is configured to support transmission of optical data signals toward the remote optical node(s) and reception of optical data signals from the remote optical node(s). The optical transceiver 601 is configured to transmit data toward the remote optical node(s) using the DFB laser 610, the EAM 620, and the duplexer 640, such as where the DFB laser 610 provides an optical signal, the EAM 620 modulates the data onto the optical signal to form an optical data signal, and the duplexer 640 directs the optical data signal onto the optical fiber 602 for propagation toward the remote optical node(s). The optical transceiver 601 is configured to receive data from the remote optical node(s) using the duplexer 640 and the PIN photodetector 630, such as where the duplexer 640 receives optical data signals on the optical fiber 602 and directs the optical data signals to the PIN photodetector 630 for detection of the optical data signals and recovery of data transmitted by the remote optical node(s). It will be appreciated that the optical transceiver 601 may include other elements which may be involved in supporting communication of data by the optical transceiver 601 of the optical communication device 600.

The optical transceiver 601, during OTDR measurements, sends an OTDR signal via the optical fiber 602 and receives a back-reflected OTDR signal via the optical fiber 602. The duplexer 640 receives the back-reflected OTDR signal and provides a first portion of the back-reflected OTDR signal to the PIN photodetector 630 and a second portion of the back-reflected OTDR signal to the EAM 620. The PIN photodetector 630 is sensitive to the power of light and, thus, can monitor the power level of the back-reflected OTDR signal by monitoring the power of the light in the first portion of the back-reflected OTDR signal. The EAM 620 has an absorption that is highly sensitive to the polarization of light and, thus, can monitor changes in the polarization of the back-reflected OTDR signal by monitoring the polarization of the light in the second portion of the back-reflected OTDR signal. Here, the EAM 620 which is typically used for high speed data modulation (as described above for the optical data communications case) is being reused as a polarization sensitive detector, thereby enabling support for polarization monitoring using an existing optical transceiver component). As a result, use of the PIN photodetector 630 and the EAM 620 enables simultaneous monitoring of the total power and variation of polarization of the incoming back-reflected OTDR signal (e.g., if the total power remains constant in the PIN photodetector 630 but the absorption in the EAM 620 varies, this means that the polarization is changing). In this manner, the optical transceiver 601 is able to support monitoring of both power and polarization characteristics of light propagating on the optical fiber 602. Here, the PIN photodetector 630 and the EAM 620 are dual-use components which are used to support both data communications and OTDR measurements, obviating the need for use of an additional PIN photodetector or an additional EAM (which are dedicated for supporting OTDR measurements) for supporting OTDR measurements and still enabling support for power and polarization monitoring without the need for dedicated polarization components, such as polarization splitters and rotators, or the need for coherent receivers.

The optical transceiver 601 is configured to operate in a manner similar to the optical transceiver 401 of FIG. 4, except that (1) to avoid perturbation of the data signal by OTDR modulation (e.g., OTDR modulation of the SOA 403 in the optical transceiver 401 of FIG. 4), a dual-section (R)SOA is used with only DC driving in data path and an adjacent OTDR drive for OTDR pulse generation and (2) the detection scheme can be done by frequency separation (e.g., high frequency signal for data, and DC or low frequency signal for OTDR). The optical transceiver 601, unlike the optical transceiver 401, includes a dual-section (R)SOA including the SOA 603 (which is disposed between the duplexer 640 and the optical fiber 602) and the RSOA 604 (which is connected to a path between the duplexer 640 and the SOA 603). The SOA 603 is driven by a DC control signal (for DC driving in the data path) and is configured to support amplification of optical data signals communicated by the optical transceiver 601 (e.g., to provide sufficient transmit power for optical data signals transmitted by the optical transceiver 601 and as a preamplifier to provide sufficient sensitivity for optical data signals received by the optical transceiver 601). The RSOA 604 is driven by an OTDR drive signal (for OTDR pulse generation) and is configured to operate as an OTDR signal source for generation of the OTDR signal that is transmitted into the optical fiber 602 to trigger creation of the back-reflected OTDR signal for OTDR measurements at the optical transceiver 601. The splitter 605 is configured to separate signals exchanged between the SOA 603 and the duplexer 640 and OTDR signals provided from the RSOA 604 to the SOA 603 for transmission over the optical fiber 602. Also, the optical transceiver 601, unlike the optical transceiver 401, further includes the EAM electronic circuit 500 which enables the optical transceiver 601 to support a detection scheme that is based on frequency separation (e.g., high frequency signal for data communications, DC or low frequency signal for OTDR).

The optical transceiver 601, as indicated above, is configured to support optical data communications and OTDR measurements. The combination of the DFB laser 610 and the EAM 620 is continuously emitting data, where the data is sent to the EAM 620 by the driver 520 of the EAM electronic circuit 500 through the HF path of the bias tee 510 of the EAM electronic circuit 500. As the SOA 603 is continuous biased, the data flux from the EAM 620 is not perturbed by the OTDR signal that is generated by the RSOA 604. The biasing source and OTDR receiver 530 of the EAM electronic circuit 500 detects, through the LF path of the bias tee 510 of the EAM electronic circuit, the back-reflected light that is absorbed in the EAM 620 from the OTDR back-reflected signal. The PIN photodetector 630 will detect both the received data signal (at wavelength λ₁) for supporting the data communications and the back-reflected OTDR signal for supporting the OTDR measurements. It will be appreciated that the received data signal and the back-reflected OTDR signal can be separated in various ways (e.g., by an analog filter prior to processing, digitally in a DSP, or the like).

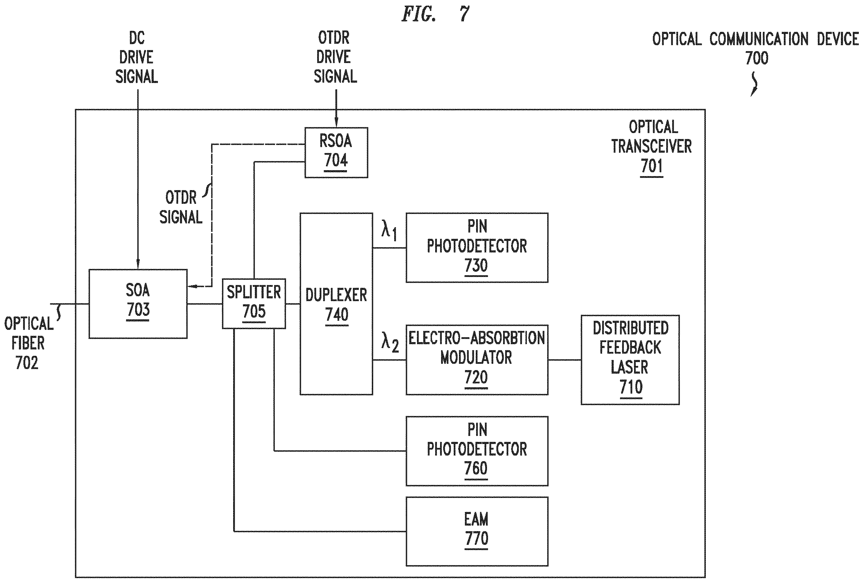

It will be appreciated that the optical communication device 600 is configured such that the EAM electronic circuit 500 enables the optical transceiver 601 to support a detection scheme that is based on frequency separation (e.g., high frequency signal for data communications, DC or low frequency signal for OTDR), as opposed to incorporating a separate dedicated PIN photodetector and EAM that are dedicated for supporting power and polarization monitoring (an example embodiment of which is presented with respect to FIG. 7).

FIG. 7 depicts an example embodiment of an optical communication device including an optical transceiver based on a dual-section amplifier and including dedicated components configured to support separation of modulated optical data signals and detected back-reflected sensing signals.

The optical communication device 700 includes an optical transceiver 701, and represents an integration of the optical communication device 200 of FIG. 2 into an optical transceiver. The optical transceiver 701 is configured to support optical data communications as well as OTDR measurements (e.g., for monitoring power and polarization), and may be configured to support optical data communications and OTDR measurements simultaneously (e.g., using a dedicated wavelength, outside of the range of wavelengths used for optical data communications, for the OTDR measurements) or separately (e.g., switching between optical data communications and OTDR measurements based on time division multiplexing between the optical data communications and the OTDR measurements). The optical transceiver 701 includes an optical fiber 702, a semiconductor optical amplifier (SOA) 703, a reflective SOA (RSOA) 704 (which, alternatively, may be an SOA), a splitter 705, a DFB laser 710, an EAM 720, a PIN photodetector 730, a duplexer 740, a PIN photodetector 760, and an EAM 770. The optical transceiver 701 is configured to support use of dedicated components for optical data communications (e.g., DBL 710, EAM 720, PIN photodetector 730, and duplexer 740) and use of dedicated components for OTDR measurements (e.g., PIN photodetector 760 and EAM 770). The splitter 705 is configured to separate the optical data communication signals of the optical data communications and the OTDR signals used for the OTDR measurements.

The optical transceiver 701, during optical data communications, is configured to support transmission of optical data signals toward the remote optical node(s) and reception of optical data signals from the remote optical node(s). The optical transceiver 701 is configured to transmit data toward the remote optical node(s) using the DFB laser 710, the EAM 720, and the duplexer 740, such as where the DFB laser 710 provides an optical signal, the EAM 720 modulates the data onto the optical signal to form an optical data signal, and the duplexer 740 directs the optical data signal onto the optical fiber 702 for propagation toward the remote optical node(s). The optical transceiver 701 is configured to receive data from the remote optical node(s) using the duplexer 740 and the PIN photodetector 730, such as where the duplexer 740 receives optical data signals on the optical fiber 702 and directs the optical data signals to the PIN photodetector 730 for detection of the optical data signals and recovery of data transmitted by the remote optical node(s). It will be appreciated that the optical transceiver 701 may include other elements which may be involved in supporting communication of data by the optical transceiver 701 of the optical communication device 700.

The optical transceiver 701, during OTDR measurements, sends an OTDR signal via the optical fiber 702 and receives a back-reflected OTDR signal via the optical fiber 702. The back-reflected OTDR signal is directed to the splitter 705. The splitter 705 receives the back-reflected OTDR signal and provides a first portion of the back-reflected OTDR signal to the PIN photodetector 760 and a second portion of the back-reflected OTDR signal to the EAM 770. The PIN photodetector 760 is sensitive to the power of light and, thus, can monitor the power level of the back-reflected OTDR signal by monitoring the power of the light in the first portion of the back-reflected OTDR signal. The EAM 770 has an absorption that is highly sensitive to the polarization of light and, thus, can monitor changes in the polarization of the back-reflected OTDR signal by monitoring the polarization of the light in the second portion of the back-reflected OTDR signal. As a result, use of the PIN photodetector 760 and the EAM 770 enables simultaneous monitoring of the total power and variation of polarization of the incoming back-reflected OTDR signal (e.g., if the total power remains constant in the PIN photodetector 760 but the absorption in the EAM 770 varies, this means that the polarization is changing). In this manner, the optical transceiver 701 is able to support monitoring of both power and polarization characteristics of light propagating on the optical fiber 702. Here, the PIN photodetector 760 and the EAM 770 are separate components dedicated for OTDR measurements, obviating the need for reuse of the PIN photodetector 730 and the EAM 720 (which are dedicated for supporting data communications) for supporting OTDR measurements and still enabling support for power and polarization monitoring without the need for dedicated polarization components, such as polarization splitters and rotators, or the need for coherent receivers.

The optical transceiver 701 is configured to operate in a manner similar to the optical transceiver 401 of FIG. 4, except that (1) to avoid perturbation of the data signal by OTDR modulation (e.g., OTDR modulation of the SOA 403 in the optical transceiver 401 of FIG. 4), a dual-section (R)SOA is used with only DC driving in data path and an adjacent OTDR drive for OTDR pulse generation and (2) the detection scheme can be done by using adjacent dedicated PIN photodetector and EAM elements (illustratively, the PIN photodetector 760 and the EAM 770). The optical transceiver 701, unlike the optical transceiver 401, includes a dual-section (R)SOA including a semiconductor optical amplifier (SOA) 703 disposed between the duplexer 740 and the optical fiber 702 and a reflective SOA (RSOA) 704 connected to a path between the duplexer and the SOA 703. The SOA 703 is driven by a DC control signal (for DC driving in the data path) and is configured to support amplification of optical data signals communicated by the optical transceiver 701 (e.g., to provide sufficient transmit power for optical data signals transmitted by the optical transceiver 701 and as a preamplifier to provide sufficient sensitivity for optical data signals received by the optical transceiver 701). The RSOA 704 is driven by an OTDR drive signal (for OTDR pulse generation) and is configured to operate as an OTDR signal source for generation of the OTDR signal that is transmitted into the optical fiber 702 to trigger creation of the back-reflected OTDR signal for OTDR measurements at the optical transceiver 701. The splitter 705 is configured to separate signals the OTDR signals provided from the RSOA 604 to the SOA 603 for transmission over the optical fiber 602 from the back-reflected OTDR signals and the optical data communication signals. Also, the optical transceiver 701, unlike the optical transceiver 401, further includes the additional PIN photodetector 760 for dedicated power monitoring at the optical transceiver 701 and the additional EAM 770 for dedicated polarization monitoring at the optical transceiver 701.

The optical transceiver 701, as indicated above, is configured to support optical data communications and OTDR measurements. The RSOA 704 can emit in a restrictive wavelength band (e.g., using a Bragg grating or other suitable element) in order to avoid cross-talk of the OTDR signals with the data signals. Here, continuous data transmission and OTDR-based sensing is possible because the SOA 703 (which is a DC-based SOA, which is configured to operate as both a booster for optical signals being transmitted and a preamplifier for optical signals being received, is not modulated and, thus, the optical data communication signals are not perturbed. Additionally, since the optical transceiver 701 includes dedicated PIN photodetector and EAM elements (illustratively, the PIN photodetector 760 and the EAM 770), the EAM 720 and PIN photodetector 730 can be dedicated to support data communications and these elements do not need to be stopped in order to measure the back-reflected light from the back-reflected OTDR signals associated with OTDR measurements.

It will be appreciated that the optical communication device 700 is configured such that a separate PIN photodetector (separate from the PIN photodetector used for data communications) and a separate EAM (separate from the EAM used for data communications) are dedicated for supporting power and polarization monitoring, as opposed to incorporating an EAM electronic to enable the optical transceiver to support a detection scheme that is based on frequency separation (an example embodiment of which is presented with respect to FIG. 6).

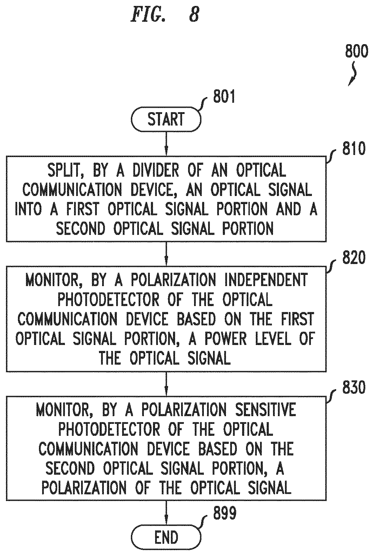

FIG. 8 depicts an example embodiment of a method for use by an optical communication device for supporting optical monitoring. It will be appreciated that, although primarily presented as being performed serially, at least a portion of the functions of the method 800 may be performed contemporaneously or in a different order than as presented with respect to FIG. 8. At block 801, the method 800 begins. At block 810, split, by a divider of an optical communication device, an optical signal into a first optical signal portion and a second optical signal portion. At block 820, monitor, by a polarization independent photodetector of the optical communication device based on the first optical signal portion, a power level of the optical signal. At block 830, monitor, by a polarization sensitive photodetector of the optical communication device based on the second optical signal portion, a polarization of the optical signal. At block 899, the method 800 ends.

It will be appreciated that various example embodiments of optical communication devices configured to support monitoring of polarization in addition to monitoring of power (e.g., example embodiments for supporting monitoring of polarization in addition to monitoring of power at optical communication devices as presented with respect to FIGs. 2 - 8) may be provided in various other ways.

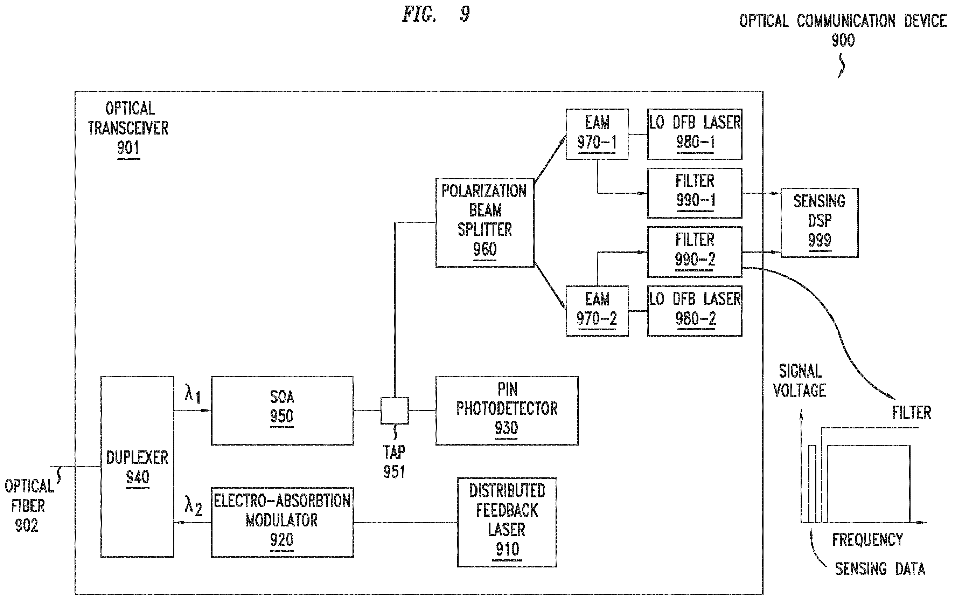

Various example embodiments of optical communication devices presented herein may be configured to support monitoring of polarization and phase in addition to monitoring of power. It will be appreciated that at least some such example embodiments for supporting monitoring of polarization and phase in addition to monitoring of power at optical communication devices are presented with respect to FIGs. 9 - 14.

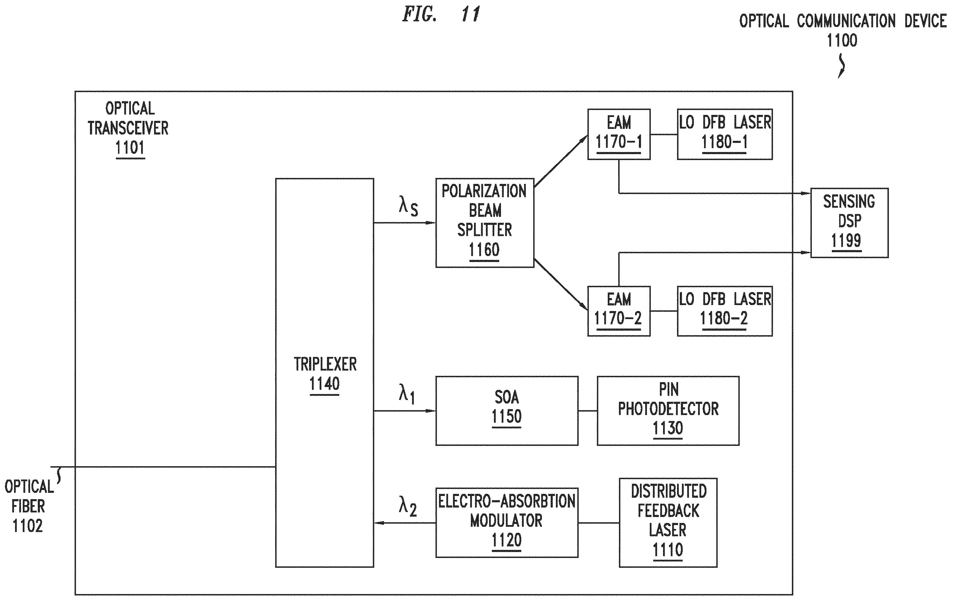

Various example embodiments for supporting monitoring of polarization and phase may be based on simplified polarization and phase detection using a polarization and phase sensitive receiver that is based on use of electro-absorption modulated laser (EML) technology (e.g., one or more EMLs configured to support EML capabilities). An EML includes a distributed feedback (DFB) laser and an electro-absorption modulator (EAM) and the incoming wavelength injection locks the DFB laser of the EML which then acts as a local oscillator (LO) that mixes with the downstream signal in the EAM section of the EML to provide a mixed signal. The mixed signal can be processed in the electrical domain (e.g., based on a sensing DSP) in order to extract the optical polarization and phase information. This scheme may be based on electrical multiplexing of the sensing signal (e.g., example embodiments of which are presented with respect to FIGs. 9 - 10) or based on optical multiplexing of the sensing signal (e.g., example embodiments of which are presented with respect to FIGs. 11 - 13). It will be appreciated that the descriptions of the example embodiments of FIGs. 9 - 13 are primarily focused on the detection scheme, and that the sensing signal that is used for extraction of polarization and phase information may be a monitoring signal received from a remote device or a back-reflected OTDR signal that is back-reflected based on local introduction of an OTDR signal (e.g., using one of various OTDR signal source arrangements, such as an external OTDR signal source, an SOA placed between the divider and the optical fiber, a dual-(R)SOA pair, or any other OTDR-based scheme presented with respect to the example embodiments of FIGs. 3 - 8).

FIG. 9 depicts an example embodiment of an optical communication device including an optical transceiver configured to support optical power, polarization, and phase monitoring, where optical polarization and phase monitoring is based on electrical multiplexing of a sensing signal and subsequent processing of a mixed signal in the electrical domain.

The optical communication device 900 includes an optical transceiver 901. The optical transceiver 901 is configured to support optical data communications as well as optical sensing measurements (e.g., for monitoring power, polarization, and phase), and may be configured to support optical data communications and optical sensing measurements simultaneously (e.g., using a dedicated wavelength, outside of the range of wavelengths used for optical data communications, for the optical sensing measurements) or separately (e.g., switching between optical data communications and optical sensing measurements based on time division multiplexing between the optical data communications and the optical sensing measurements). The optical transceiver 901 includes an optical fiber 902, a DFB laser 910, an EAM 920, a PIN photodetector 930, a duplexer 940, an SOA 950, a tap 951, and various additional components configured to support optical polarization and phase monitoring (illustratively, a polarization beam splitter (PBS) 960, a pair of EAMs 970-1 and 970-2 (collectively, EAMs 970), a pair of LO DFB lasers 980-1 and 980-2 (collectively, LO-DFB lasers 980), and a pair of filters 990-1 and 990-2 (collectively, filters 990). The optical communication device 900 further includes a sensing DSP 999 configured to support processing of a mixed signal in the electrical domain for monitoring the polarization and phase.

The optical transceiver 901, during optical data communications, is configured to support transmission of optical data signals toward the remote optical node(s) and reception of optical data signals from the remote optical node(s). The optical transceiver 901 is configured to transmit data toward the remote optical node(s) using the DFB laser 910, the EAM 920, and the duplexer 940, such as where the DFB laser 910 provides an optical signal, the EAM 920 modulates the data onto the optical signal to form an optical data signal, and the duplexer 940 directs the optical data signal onto the optical fiber 902 for propagation toward the remote optical node(s). The optical transceiver 901 is configured to receive data from the remote optical node(s) using the duplexer 940, the SOA 950, and the PIN photodetector 930, such as where the duplexer 940 receives optical data signals on the optical fiber 902 and directs the optical data signals to the SOA 950, the SOA 950 amplifies the optical data signals and directs the amplified optical data signals to the PIN photodetector 930 for detection of the optical data signals and recovery of data transmitted by the remote optical node(s). It will be appreciated that the optical transceiver 901 may include other elements which may be involved in supporting communication of data by the optical transceiver 901 of the optical communication device 900.

The optical transceiver 901, during optical sensing measurements, receives an optical testing signal (e.g., a monitoring signal received over the optical fiber 902 from a remote optical communication device or a back-reflected OTDR signal received over the optical fiber 902). The duplexer 940, as with received optical data signals, directs the optical testing signal toward the PIN photodetector 930. This results in mixing of the optical data signal and the optical testing signal, which forms a mixed signal which is provided by the duplexer to the SOA 950. The SOA 950 amplifies the mixed signal to form an amplified mixed signal and provides the amplified mixed signal toward the PIN photodetector 930. The tap 951, which is disposed between the SOA 950 and the PIN photodetector 930, taps a small amount of optical power from the amplified mixed signal to form a sensing signal and directs this sensing signal toward the additional components configured to support optical polarization and phase monitoring. It is noted that the sensing channel can be modulated at any suitable data rate and, in at least some example embodiments, may be modulated at a rate that is significantly less than the rate of the optical data channel is order to enable a sensing solution that supports relatively low complexity and relatively low power consumption.

The optical transceiver 901, during optical sensing measurements, determines optical polarization and phase information based on EML technology. The sensing signal from the tap 951 is provided to the PBS 960, which separates the orthogonal polarization states to form separated optical signals and provides the separated optical signals to the EAMs 970-1 and 970-2, respectively (e.g., a first optical signal based on a first polarization being provided to EAM 970-1 and a second optical signal based on a second polarization being provided to the EAM 970-2). The separated optical signals mix with local oscillator signals provided by the injection locked LO DFB lasers 980-1 and 980-2 associated with the EAMs 970-1 and 970-2 to provide mixed signals associated with the EAMs 970-1 and 970-2, respectively. The mixed signals from the EAMs 970-1 and 970-2 are provided to the filters 990-1 and 990-2, respectively, which filter the mixed signals, filtering the low frequency monitoring signal from the high speed data signals, to produce filtered signals. The filtered signals are provided from the filters 990 to the sensing DSP 999, which performs processing based on the filtered signals to determine the optical polarization and phase information. Here, the filtered signals may be used as analysis signals which may be analyzed or otherwise processed by the DSP 999 to determine polarization and/or phase information.

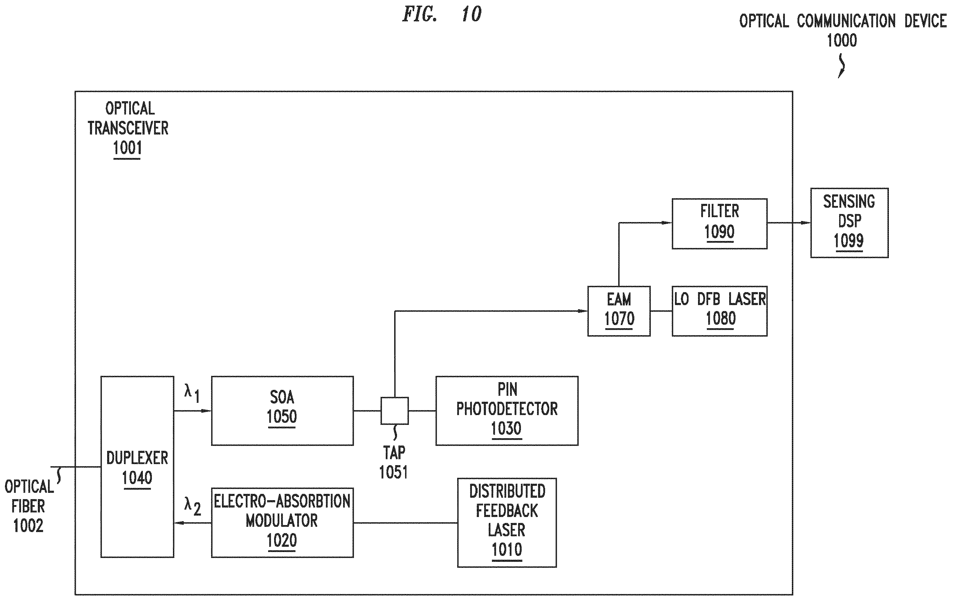

FIG. 10 depicts an example embodiment of an optical communication device including an optical transceiver configured to support optical power, polarization, and phase monitoring, where optical polarization and phase monitoring is based on electrical multiplexing of a sensing signal and subsequent processing of a mixed signal in the electrical domain.

The optical communication device 1000 includes an optical transceiver 1001. The optical transceiver 1001 is configured to support optical data communications as well as optical sensing measurements (e.g., for monitoring power, polarization, and phase), and may be configured to support optical data communications and optical sensing measurements simultaneously (e.g., using a dedicated wavelength, outside of the range of wavelengths used for optical data communications, for the optical sensing measurements) or separately (e.g., switching between optical data communications and optical sensing measurements based on time division multiplexing between the optical data communications and the optical sensing measurements). The optical transceiver 1001 includes an optical fiber 1002, a DFB laser 1010, an EAM 1020, a PIN photodetector 1030, a duplexer 1040, an SOA 1050, a tap 1051, and various additional components configured to support optical polarization and phase monitoring (illustratively, an EAM 1070, an LO DFB laser 1080, and a filter 1090). The optical communication device 1000 further includes a sensing DSP 1099 configured to support processing of a mixed signal in the electrical domain for monitoring the polarization and phase.

The optical transceiver 1001, during optical data communications, is configured to support transmission of optical data signals toward the remote optical node(s) and reception of optical data signals from the remote optical node(s). The optical transceiver 1001 is configured to transmit data toward the remote optical node(s) using the DFB laser 1010, the EAM 1020, and the duplexer 1040, such as where the DFB laser 1010 provides an optical signal, the EAM 1020 modulates the data onto the optical signal to form an optical data signal, and the duplexer 1040 directs the optical data signal onto the optical fiber 1002 for propagation toward the remote optical node(s). The optical transceiver 1001 is configured to receive data from the remote optical node(s) using the duplexer 1040, the SOA 1050, and the PIN photodetector 1030, such as where the duplexer 1040 receives optical data signals on the optical fiber 1002 and directs the optical data signals to the SOA 1050, the SOA 1050 amplifies the optical data signals and directs the amplified optical data signals to the PIN photodetector 1030 for detection of the optical data signals and recovery of data transmitted by the remote optical node(s). It will be appreciated that the optical transceiver 1001 may include other elements which may be involved in supporting communication of data by the optical transceiver 1001 of the optical communication device 1000.

The optical transceiver 1001, during optical sensing measurements, receives an optical testing signal (e.g., a monitoring signal received over the optical fiber 1002 from a remote optical communication device or a back-reflected OTDR signal received over the optical fiber 1002). The duplexer 1040, as with received optical data signals, directs the optical testing signal toward the PIN photodetector 1030. This results in mixing of the optical data signal and the optical testing signal, which forms a mixed signal which is provided by the duplexer to the SOA 1050. The SOA 1050 amplifies the mixed signal to form an amplified mixed signal and provides the amplified mixed signal toward the PIN photodetector 1030. The tap 1051, which is disposed between the SOA 1050 and the PIN photodetector 1030, taps a small amount of optical power from the amplified mixed signal to form a sensing signal and directs this sensing signal toward the additional components configured to support optical polarization and phase monitoring. It is noted that the sensing channel can be modulated at any suitable data rate and, in at least some example embodiments, may be modulated at a rate that is significantly less than the rate of the optical data channel is order to enable a sensing solution that supports relatively low complexity and relatively low power consumption.

The optical transceiver 1001, during optical sensing measurements, determines optical polarization and phase information based on EML technology. The sensing signal from the tap 1051 is provided to the EAM 1070. The sensing signal mixes with a local oscillator signal provided by injection locked LO DFB laser 1080 associated with the EAM 1070 to provide a mixed signal associated with the EAM 1070. The mixed signal from the EAM 1070 is provided to the filter 1090 which filters the mixed signal, filtering the low frequency monitoring signal from the high speed data signals, to produce a filtered signal. The filtered signal is provided from the filter 1090 to the sensing DSP 1099, which performs processing based on the filtered signal to determine the optical polarization and phase information. Here, the filtered signal may be used as an analysis signal which may be analyzed or otherwise processed by the DSP 1099 to determine polarization and/or phase information. It will be appreciated that the operation of the optical transceiver 1001 for optical sensing is similar to the operation of the optical transceiver 901 of FIG. 9, except that only a single EML is used, thereby obviating the need for the PBS and pairs of EMLs as used in transceiver 901 of FIG. 9 and, thus, lowering complexity and cost.

FIG. 11 depicts an example embodiment of an optical communication device including an optical transceiver configured to support optical power, polarization, and phase monitoring, where optical polarization and phase monitoring is based on optical multiplexing of a sensing signal and subsequent processing of a mixed signal in the electrical domain.

The optical communication device 1100 includes an optical transceiver 1101. The optical transceiver 1101 is configured to support optical data communications as well as optical sensing measurements (e.g., for monitoring power, polarization, and phase), and may be configured to support optical data communications and optical sensing measurements simultaneously (e.g., using a dedicated wavelength, outside of the range of wavelengths used for optical data communications, for the optical sensing measurements) or separately (e.g., switching between optical data communications and optical sensing measurements based on time division multiplexing between the optical data communications and the optical sensing measurements). The optical transceiver 1101 includes an optical fiber 1102, a DFB laser 1110, an EAM 1120, a PIN photodetector 1130, a triplexer 1140, an SOA 1150, and various additional components configured to support optical polarization and phase monitoring (illustratively, a polarization beam splitter (PBS) 1160, a pair of EAMs 1170-1 and 1170-2 (collectively, EAMs 1170), and a pair of LO DFB lasers 1180-1 and 1180-2 (collectively, LO DFB lasers 1180). It is noted that here, unlike the optical transceivers 900 and 1000 of FIG. 9 and 10, respectively, the sensing measurements are based on use of a third wavelength (denoted as λₛ) which is separated from the downstream data communication wavelength as λ₁ and the upstream data communication wavelength λ₂ based on the triplexer 1140. In this optical multiplexed case, no additional low pass electrical filtering is needed since the sensing signal is already extracted optically with the triplexer 1040. The optical communication device 1100 further includes a sensing DSP 1199 configured to support processing of a mixed signal in the electrical domain for monitoring the polarization and phase.

The optical transceiver 1101, during optical data communications, is configured to support transmission of optical data signals toward the remote optical node(s) and reception of optical data signals from the remote optical node(s). The optical transceiver 1101 is configured to transmit data toward the remote optical node(s) using the DFB laser 1110, the EAM 1120, and the triplexer 1140, such as where the DFB laser 1110 provides an optical signal, the EAM 1120 modulates the data onto the optical signal to form an optical data signal, and the triplexer 1140 directs the optical data signal onto the optical fiber 1102 for propagation toward the remote optical node(s). The optical transceiver 1101 is configured to receive data from the remote optical node(s) using the triplexer 1140, the SOA 1150, and the PIN photodetector 1130, such as where the triplexer 1140 receives optical data signals on the optical fiber 1102 and directs the optical data signals to the SOA 1150, the SOA 1150 amplifies the optical data signals and directs the amplified optical data signals to the PIN photodetector 1130 for detection of the optical data signals and recovery of data transmitted by the remote optical node(s). It will be appreciated that the optical transceiver 1101 may include other elements which may be involved in supporting communication of data by the optical transceiver 1101 of the optical communication device 1100.

The optical transceiver 1101, during optical sensing measurements, determines optical polarization and phase information based on EML technology. The optical transceiver 1101, during optical sensing measurements, receives an optical testing signal (e.g., a monitoring signal received over the optical fiber 1102 from a remote optical communication device or a back-reflected OTDR signal received over the optical fiber 1102). The optical testing signal, as indicated above, uses a third wavelength (λₛ) that is separate from the wavelengths used for data communication (λ₁ and λ₂). The triplexer 1140 separates the optical testing signal from the optical data signals and provides the optical testing signal to the PBS 1160. The PBS 1160 separates the orthogonal polarization states to form separated optical signals and provides the separated optical signals to the EAMs 1170-1 and 1170-2, respectively (e.g., a first optical signal based on a first polarization being provided to EAM 1170-1 and a second optical signal based on a second polarization being provided to the EAM 1170-2). The separated optical signals mix with local oscillator signals provided by the injection locked LO DFB lasers 1180-1 and 1180-2 associated with the EAMs 1170-1 and 1170-2 to provide mixed signals associated with the EAMs 1170-1 and 1170-2, respectively. The mixed signals from the EAMs 1170-1 and 1170-2 are provided to the sensing DSP 1199, which performs processing based on the mixed signals to determine the optical polarization and phase information. Here, the EAMs 1170 operate as sensors to provide sensing signals, and the sensing signals from the EAMs 1170 are provided to the sensing DSP 1199, which performs processing based on the sensing signal to determine the optical polarization and phase information. Here, the sensing signals may be used as analysis signals which may be analyzed or otherwise processed by the DSP 1199 to determine polarization and/or phase information.

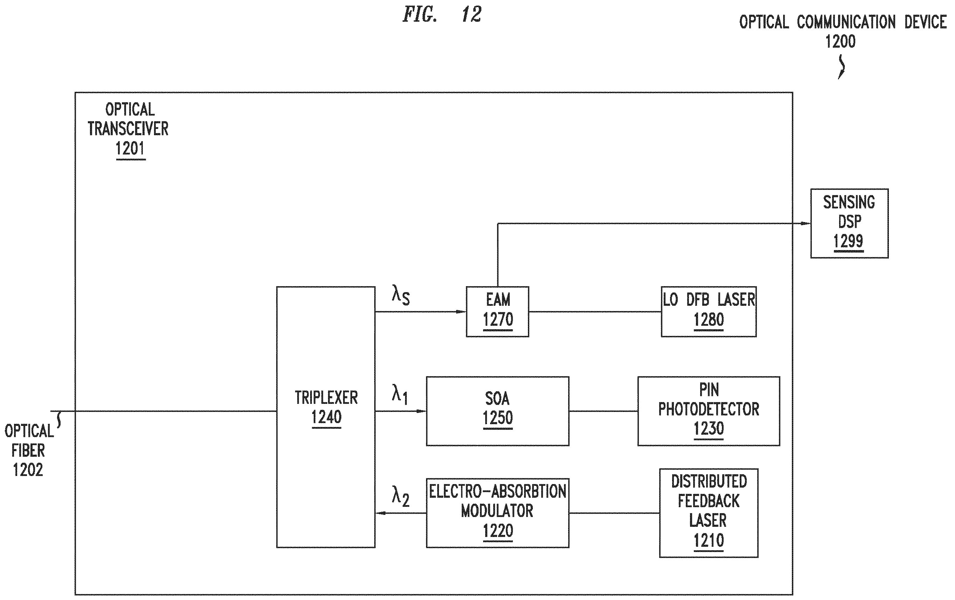

FIG. 12 depicts an example embodiment of an optical communication device including an optical transceiver configured to support optical power, polarization, and phase monitoring, where optical polarization and phase monitoring is based on optical multiplexing of a sensing signal and subsequent processing of a mixed signal in the electrical domain.

The optical communication device 1200 includes an optical transceiver 1201. The optical transceiver 1201 is configured to support optical data communications as well as optical sensing measurements (e.g., for monitoring power, polarization, and phase), and may be configured to support optical data communications and optical sensing measurements simultaneously (e.g., using a dedicated wavelength, outside of the range of wavelengths used for optical data communications, for the optical sensing measurements) or separately (e.g., switching between optical data communications and optical sensing measurements based on time division multiplexing between the optical data communications and the optical sensing measurements). The optical transceiver 1201 includes an optical fiber 1202, a DFB laser 1210, an EAM 1220, a PIN photodetector 1230, a triplexer 1240, an SOA 1250, and various additional components configured to support optical polarization and phase monitoring (illustratively, an EAM 1270 and an LO DFB laser 1280). It is noted that here, unlike the optical transceivers 900 and 1000 of FIG. 9 and 10, respectively, the sensing measurements are based on use of a third wavelength (denoted as λₛ) which is separated from the downstream data communication wavelength as λ₁ and the upstream data communication wavelength λ₂ based on the triplexer 1240. In this optical multiplexed case, no additional low pass electrical filtering is needed since the sensing signal is already extracted optically with the triplexer 1240. The optical communication device 1200 further includes a sensing DSP 1299 configured to support processing of a mixed signal in the electrical domain for monitoring the polarization and phase.

The optical transceiver 1201, during optical data communications, is configured to support transmission of optical data signals toward the remote optical node(s) and reception of optical data signals from the remote optical node(s). The optical transceiver 1201 is configured to transmit data toward the remote optical node(s) using the DFB laser 1210, the EAM 1220, and the triplexer 1240, such as where the DFB laser 1210 provides an optical signal, the EAM 1220 modulates the data onto the optical signal to form an optical data signal, and the triplexer 1240 directs the optical data signal onto the optical fiber 1202 for propagation toward the remote optical node(s). The optical transceiver 1201 is configured to receive data from the remote optical node(s) using the triplexer 1240, the SOA 1250, and the PIN photodetector 1230, such as where the triplexer 1240 receives optical data signals on the optical fiber 1202 and directs the optical data signals to the SOA 1250, the SOA 1250 amplifies the optical data signals and directs the amplified optical data signals to the PIN photodetector 1230 for detection of the optical data signals and recovery of data transmitted by the remote optical node(s). It will be appreciated that the optical transceiver 1201 may include other elements which may be involved in supporting communication of data by the optical transceiver 1201 of the optical communication device 1200.

The optical transceiver 1201, during optical sensing measurements, determines optical polarization and phase information based on EML technology. The optical transceiver 1201, during optical sensing measurements, receives an optical testing signal (e.g., a monitoring signal received over the optical fiber 1202 from a remote optical communication device or a back-reflected OTDR signal received over the optical fiber 1202). The optical testing signal, as indicated above, uses a third wavelength (λₛ) that is separate from the wavelengths used for data communication (λ₁ and λ₂). The triplexer 1240 separates the optical testing signal from the optical data signals and provides the optical testing signal to the EAM 1270. The testing signal mixes with a local oscillator signal provided by injection locked LO DFB laser 1280 associated with the EAM 1270 to provide a mixed signal associated with the EAM 1270. Here, the EAM 1270 operates as a sensor to provide a sensing signal, and the sensing signal from the EAM 1270 is provided to the sensing DSP 1299, which performs processing based on the sensing signal to determine the optical polarization and phase information. Here, the sensing signal may be used as an analysis signal which may be analyzed or otherwise processed by the DSP 1299 to determine polarization and/or phase information. It will be appreciated that the operation of the optical transceiver 1201 for optical sensing is similar to the operation of the optical transceiver 1101 of FIG. 11, except that only a single EML is used, thereby obviating the need for the PBS and pairs of EMLs as used in transceiver 1101 of FIG. 11 and, thus, lowering complexity and cost.

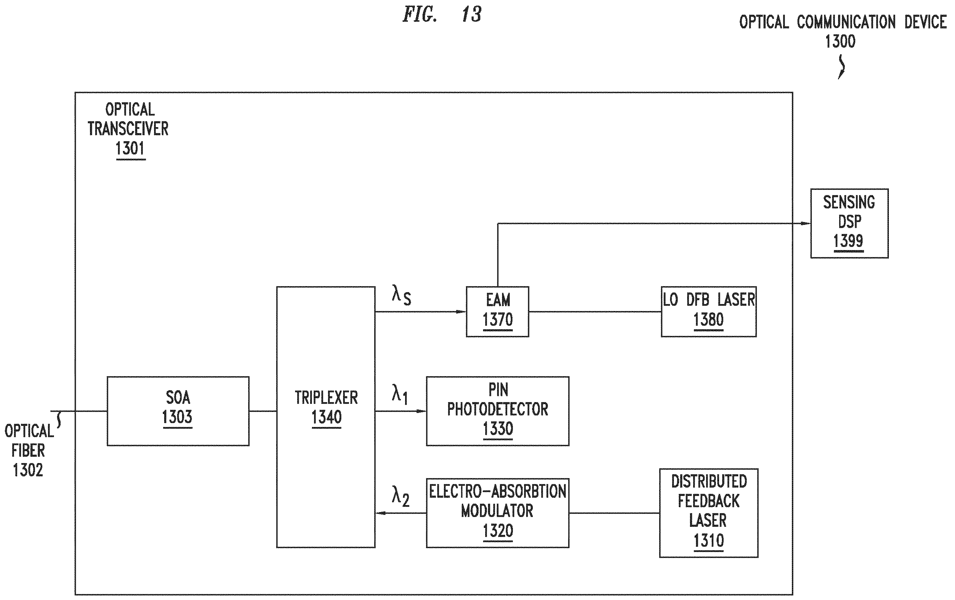

FIG. 13 depicts an example embodiment of an optical communication device including an optical transceiver configured to support optical power, polarization, and phase monitoring, where optical polarization and phase monitoring is based on optical multiplexing of a sensing signal and subsequent processing of a mixed signal in the electrical domain.

The optical communication device 1300 includes an optical transceiver 1301. The optical transceiver 1301 is configured to support optical data communications as well as optical sensing measurements (e.g., for monitoring power, polarization, and phase), and may be configured to support optical data communications and optical sensing measurements simultaneously (e.g., using a dedicated wavelength, outside of the range of wavelengths used for optical data communications, for the optical sensing measurements) or separately (e.g., switching between optical data communications and optical sensing measurements based on time division multiplexing between the optical data communications and the optical sensing measurements). The optical transceiver 1301 includes an optical fiber 1302, an SOA 1303, a DFB laser 1310, an EAM 1320, a PIN photodetector 1330, a triplexer 1340, and various additional components configured to support optical polarization and phase monitoring (illustratively, an EAM 1370 and an LO DFB laser 1380). It is noted that here, unlike the optical transceivers 900 and 1000 of FIG. 9 and 10, respectively, the sensing measurements are based on use of a third wavelength (denoted as λₛ) which is separated from the downstream data communication wavelength as λ₁ and the upstream data communication wavelength λ₂ based on the triplexer 1340. In this optical multiplexed case, no additional low pass electrical filtering is needed since the sensing signal is already extracted optically with the triplexer 1340. The optical communication device 1300 further includes a sensing DSP 1399 configured to support processing of a mixed signal in the electrical domain for monitoring the polarization and phase.

The optical transceiver 1301, during optical data communications, is configured to support transmission of optical data signals toward the remote optical node(s) and reception of optical data signals from the remote optical node(s). The optical transceiver 1301 is configured to transmit data toward the remote optical node(s) using the DFB laser 1310, the EAM 1320, and the triplexer 1340, such as where the DFB laser 1310 provides an optical signal, the EAM 1320 modulates the data onto the optical signal to form an optical data signal, and the triplexer 1340 directs the optical data signal onto the optical fiber 1302 for propagation toward the remote optical node(s). The optical transceiver 1301 is configured to receive data from the remote optical node(s) using the triplexer 1340 and the PIN photodetector 1330, such as where the triplexer 1340 receives optical data signals on the optical fiber 1302 and directs the optical data signals to the PIN photodetector 1330 for detection of the optical data signals and recovery of data transmitted by the remote optical node(s). In both cases, the SOA 1303 supports amplification of the optical data signals (e.g., as a pre-amplifier for received optical data signals and a post-amplifier for transmitted optical data signals). It will be appreciated that the optical transceiver 1301 may include other elements which may be involved in supporting communication of data by the optical transceiver 1301 of the optical communication device 1300.

The optical transceiver 1301, during optical sensing measurements, determines optical polarization and phase information based on EML technology. The optical transceiver 1301, during optical sensing measurements, receives an optical testing signal (e.g., a monitoring signal received over the optical fiber 1302 from a remote optical communication device or a back-reflected OTDR signal received over the optical fiber 1302). The optical testing signal, as indicated above, uses a third wavelength (λₛ) that is separate from the wavelengths used for data communication (λ₁ and λ₂). The triplexer 1340 separates the optical testing signal from the optical data signals and provides the optical testing signal to the EAM 1370. The testing signal mixes with a local oscillator signal provided by injection locked LO DFB laser 1380 associated with the EAM 1370 to provide a mixed signal associated with the EAM 1370. The mixed signal from the EAM 1370 is provided to the sensing DSP 1399, which performs processing based on the mixed signal to determine the optical polarization and phase information. Here, the mixed signal may be used as an analysis signal which may be analyzed or otherwise processed by the DSP 1399 to determine polarization and/or phase information. It will be appreciated that the operation of the optical transceiver 1301 for optical sensing is similar to the operation of the optical transceiver 1201 of FIG. 12, except that the SOA 1303 disposed between the optical fiber 1302 and the triplexer 1340 provide amplification of the optical testing signal received at the optical transceiver 1301 and used to determine optical polarization and phase information.

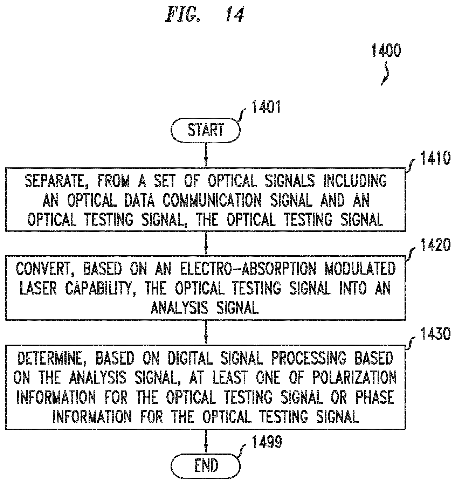

FIG. 14 depicts an example embodiment of a method for use by an optical communication device for supporting optical monitoring. It will be appreciated that, although primarily presented as being performed serially, at least a portion of the functions of the method 1400 may be performed contemporaneously or in a different order than as presented with respect to FIG. 14. At block 1401, the method 1400 begins. At block 1410, separate, from a set of optical signals including an optical data communication signal and an optical testing signal, the optical testing signal. At block 1420, convert, based on an electro-absorption modulated laser capability, the optical testing signal into an analysis signal. At block 1430, determine, based on digital signal processing based on the analysis signal, at least one of polarization information for the optical testing signal or phase information for the optical testing signal. At block 1499, the method 1400 ends.

It will be appreciated that various example embodiments of optical communication devices configured to support monitoring of polarization and phase in addition to monitoring of power (e.g., example embodiments for supporting monitoring of polarization and phase in addition to monitoring of power at optical communication devices as presented with respect to FIGs. 9 - 14) may be provided in various other ways.

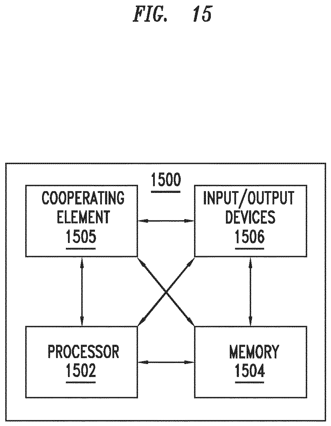

FIG. 15 depicts an example embodiment of a computer suitable for use in performing various functions presented herein.

The computer 1500 includes a processor 1502 and a memory 1504. The processor 1502 may be a processing unit (e.g., a central processing unit (CPU), a graphics processing unit (GPU), or the like), a portion of a processing unit (e.g., a set of processor cores, a single processor core, or the like), or the like. The memory 1504 may be a random access memory (RAM), a read-only memory (ROM), or the like. In at least some example embodiments, the computer 1500 may include at least one processor and at least one memory storing instructions which, when executed by the at least one processor, cause the computer 1500 to perform various functions presented herein.

The computer 1500 also may include a cooperating element 1505. The cooperating element 1505 may include hardware, firmware, software, or the like, as well as various combinations thereof. The cooperating element 1505 may be a process that can be loaded into the memory 1504 and executed by the processor 1502 to implement various functions presented herein (in which case, for example, the cooperating element 1505 (including associated data structures) can be stored on a non-transitory computer readable medium, such as a storage device or other suitable type of storage element (e.g., a magnetic drive, an optical drive, a solid state drive, or the like)).

The computer 1500 also may include one or more input/output devices 1506. The input/output devices 1506 may include one or more of a user input device (e.g., a keyboard, a keypad, a mouse, a microphone, a camera, or the like), a user output device (e.g., a display, a speaker, or the like), one or more network communication devices or network communication elements (e.g., an input port, an output port, a receiver, a transmitter, a transceiver, or the like), one or more storage devices (e.g., a tape drive, a floppy drive, a hard disk drive, a solid state drive, or the like), or the like, as well as various combinations thereof.

It will be appreciated that computer 1500 may represent a general architecture and functionality suitable for implementing functional elements described herein, portions of functional elements described herein, or the like, as well as various combinations thereof. For example, the computer 1500 may provide a general architecture and functionality that is suitable for implementing one or more elements presented herein. For example, the computer 1500 may provide a general architecture and functionality that is suitable for implementing at least one of an OLT or a portion thereof, an ONU or a portion thereof, an optical transceiver or a portion thereof, an optical receiver or a portion thereof, an optical communication device or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
an optical communication device comprising:
a divider configured to split an optical signal into a first optical signal portion and a second optical signal portion;
a polarization independent photodetector configured to monitor a power level of the optical signal based on the first optical signal portion; and
a polarization sensitive photodetector configured to monitor a polarization of the optical signal based on the second optical signal portion.

2. The apparatus according to claim 1, wherein the polarization sensitive photodetector comprises a modulator-detector configured to support a modulation function and a detection function or wherein the polarization sensitive photodetector comprises a reversely-biased electro-absorption modulator based on quantum confined stark effect (QCSE).

3. The apparatus according to any of claims 1 to 2, wherein the polarization sensitive photodetector comprises a polarization sensitive interferometric modulator and a detector, wherein a first side of the polarization sensitive interferometric modulator is connected to the divider and a second side of the polarization sensitive interferometric modulator is connected to the detector.

4. The apparatus according to claim 3, wherein the polarization sensitive interferometric modulator comprises a Mach-Zehnder modulator or a ring modulator.

5. The apparatus according to any of claims 1 to 4, wherein the optical communication device is configured to detect a change in the polarization of the optical signal based on a determination that a power level of the first optical signal portion remains relatively constant at the polarization independent photodetector while an absorption level of the second optical signal portion at the polarization sensitive photodetector varies.

6. The apparatus according to any of claims 1 to 5, wherein the optical communication device is configured to detect a condition or an event associated with an optical fiber based on one of:
a determination that a power level of the first optical signal portion varies at the polarization independent photodetector; or
a determination that a power level of the first optical signal portion remains relatively constant at the polarization independent photodetector while an absorption level of the second optical signal portion at the polarization sensitive photodetector varies.

7. The apparatus according to any of claims 1 to 6, wherein the optical signal comprises a back-reflected optical time domain reflectometry signal received at the optical communication device
or wherein the optical signal comprises a monitoring optical signal received at the optical communication device from a remote optical communication device via an optical fiber or wherein the optical signal comprises a wideband sensing signal including a first wavelength and a second wavelength, wherein the first optical signal portion is at the first wavelength and the second optical signal portion is at the second wavelength.

8. The apparatus according to any of claims 1 to 6, wherein the optical signal comprises a wavelength outside of a data transmission wavelength range used by the optical communication device for data transmissions,
wherein the optical communication device is configured to support parallel operation of the data transmissions by the optical communication device and monitoring by the optical communication device based on the optical signal.

9. The apparatus according to any of claims 1 to 6, wherein the optical signal comprises a wavelength within a data transmission wavelength range used by the optical communication device for data transmissions, wherein the optical communication device is configured to switch between the data transmissions by the optical communication device and monitoring by the optical communication device based on the optical signal.

10. The apparatus according to any of claims 1 to 9, wherein the divider comprises a wavelength splitter, wherein the optical communication device is configured to operate as both a data communication transceiver for optical data signals and an optical time domain reflectometry transceiver for optical time domain reflectometry signals, wherein the optical communication device further comprises:
a semiconductor optical amplifier disposed between the wavelength splitter and an optical fiber, wherein the semiconductor optical amplifier is configured to amplify the optical data signals and the optical time domain reflectometry signals; and
a laser connected to the polarization sensitive photodetector, wherein the laser is configured to generate light to be modulated in the polarization sensitive photodetector for the optical data signals; and
wherein the wavelength splitter is configured to connect a first wavelength between the wavelength splitter and the polarization independent photodetector and a second wavelength, different from the first wavelength, between the wavelength splitter and the polarization sensitive photodetector.

11. The apparatus according to claim 10, wherein the optical communication device is configured to perform an optical time domain reflectometry test
by:
supporting initiation of the optical time domain reflectometry test by switching off the laser, stopping modulation of communications data by the polarization sensitive photodetector, and modulating the semiconductor amplifier to generate an optical time domain reflectometry pulse; and
supporting an optical time domain reflectometry measurement by receiving a back-reflected optical time domain reflectometry signal, detecting a reflected power of the back-reflected optical time domain reflectometry signal by the polarization independent photodetector, and obtaining information on variation of polarization of the back-reflected optical time domain reflectometry signal based on detection of at least one polarization by the polarization sensitive photodetector.

12. The apparatus according to any of claims 1 to 11, wherein the optical communication device further comprises:
a driver configured to provide an electrical drive signal for optical data signals;
an optical time domain reflectometry electrical receiver configured to receive an electrical sensing signal associated with the second optical signal portion; and
an electrical circuit configured to separate the electrical drive signal for the optical data signal and the electrical sensing signal associated with the second optical signal portion using at least one of time multiplexing or frequency multiplexing.

13. The apparatus according to claim 12, wherein the electrical circuit comprises an amplification path configured to connect the driver to the polarization sensitive photodetector and a detection path configured to connect the polarization sensitive photodetector to the optical time domain reflectometry electrical receiver, wherein the driver includes a time switch configured to switch the electrical circuit between use of the amplification path and use of the detection path.

14. The apparatus according to claim 13, wherein the optical communication device is configured to support continuous use of optical data communications and optical sensing based on:
continuous modulation of communications data by the polarization sensitive photodetector, based on continuous emission of optical power by a laser associated with the polarization sensitive photodetector, to form the optical data signals;
continuous detection of received optical data signals by the polarization independent photodetector;
modulation of a first optical amplifier to generate an optical time domain reflectometry signal;
continuous driving of a second optical amplifier by a direct current driver to amplify the optical data signals and the optical time domain reflectometry signals;
detection, by the polarization independent photodetector, of the received optical data signals and a back-reflected optical time domain reflectometry signal; and
detection, by the optical time domain reflectometry electrical receiver via a low frequency path of the electrical circuit based on absorption of the back-reflected optical time domain reflectometry signal by the polarization sensitive photodetector, of the back-reflected optical time domain reflectometry signal.

15. The apparatus according to any of claims 1 to 14, wherein the optical communication device comprises:
an optical amplifier pair including a first optical amplifier configured to be modulated to generate an optical time domain reflectometry signal transmitted by the optical communication device and a second optical amplifier configured to support continuous amplification of both an optical data signal transmitted by the optical communication device and the optical time domain reflectometry signal transmitted by the optical communication device;
an optical time domain reflectometry driver configured to generate an optical time domain reflectometry drive signal for the first optical amplifier; and
a direct current driver configured to generate a direct current drive signal for the second optical amplifier.
